# EUROPEAN PATENT SPECIFICATION

(11) **EP 2 669 159 B1**
(45) Date of publication and mention of the grant of the patent: **05.08.2015**
(21) Application number: 13150366.6
(22) Date of filing: 07.01.2013
(51) Int. Cl.: B62J 1/12, B62J 35/00, B62K 19/46

(54) **Saddle type vehicle**
Motorrad
Motocyclette

(30) Priority: 31.05.2012 JP 2012125166
(43) Date of publication of application: 04.12.2013
(73) Proprietor: Yamaha Hatsudoki Kabushiki Kaisha, Iwata-shi, Shizuoka 438-8501 (JP)
(72) Inventor: Takehana, Daiki, Iwata-shi, Shizuoka 438-8501 (JP)
(74) Representative: Grünecker Patent- und Rechtsanwälte PartG mbB

(56) References cited:
- EP-A1- 1 577 200
- EP-A1- 2 138 389
- EP-A2- 0 842 844
- WO-A1-03/004338
- JP-B2- 3 574 130

## Description

The present invention relates to a saddle type vehicle **according to the preamble of independent claim 1.**

Japanese Patent No. 3574130 discloses a motorcycle as an example of a saddle type vehicle **according to the preamble of independent claim 1**. This motorcycle includes a seat lock device which locks a seat. A front portion of the seat is connected to a vehicle body frame by a hinge. The seat is rotatable up and down about the hinge. The seat lock device includes a seat hook mounted at a rear portion of the seat and a claw portion mounted on the vehicle body frame. The seat hook is lowered, together with the rear portion of the seat, from above the claw portion. Accordingly, the seat hook is mounted on the claw portion, and the rear portion of the seat is locked on the seat lock device.

However, components of saddle type vehicles such as seats have dimensional variations. Similarly, variation exists also in the connecting positions between the components such as welding positions. Therefore, in some cases, there is a large height difference between the hinge and seat lock device, and in some other cases, there is a large height difference between a front portion of the seat and a rear portion of the seat. Consequently, the rear portion of the seat is not sufficiently lowered and the seat is not locked on the seat lock device in some cases. Moreover, even if the seat is locked, when there is a clearance around the seat hook or when the holding power of the seat hook is weak, noise due to seat vibration occurs.

For solving these problems, a method of enhancing the dimensional accuracy of the respective components can be considered, however, the productivity of the saddle type vehicle declines with this method.

**Prior art document** EP 0 842 844 A2 **discloses a vehicle seat having a seat bank and a collapsible backrest able to be turned round a turning joint from the back resting position to the collapsed position. When collapsed, it can be used as an extra seat. When in the upright position, its angle can be adjusted. The joint consists of a rear carrier sector fixed to the cycle structure, with at least two spaced-out bearing eyes with borings to receive a bearing shaft for the backrest. A setting mechanism fitted to the backrest acts with one of the bearing eyes.**

It is an object of the present invention to provide a saddle type vehicle having suitable and high strength configuration.

According to the present invention said object is solved by saddle type vehicle having the features of independent claim 1. Preferred embodiments are laid down in the dependent claims.

According to an aspect it is provided a saddle type vehicle including a vehicle body frame, a seat, a seat connecting device, a seat lock device, and a lock release device. The seat is disposed over the vehicle body frame. The seat connecting device connects a portion of the seat to the vehicle body frame. The seat lock device includes a locking member provided on one of the vehicle body frame and seat, and a locking mechanism arranged to lock the locking member and provided on the other of the vehicle body frame and seat. Further, the seat lock device includes a locking position adjusting mechanism capable of adjusting the height of a locking position at which the locking member is locked by the locking mechanism. The seat lock device locks the seat to the vehicle body frame by causing the locking mechanism to lock the locking member in state in which the portion of the seat is connected to the vehicle body frame by the seat connecting device. The lock release device releases a lock of the seat by the seat lock device.

According to this arrangement, the seat disposed over the vehicle body frame is locked on the vehicle body frame by the seat connecting device and the seat lock device, and the lock of the seat is released by the lock release device. Specifically, a portion of the seat is connected to the vehicle body frame by the seat connecting device, while another portion of the seat is locked to the vehicle body frame by the locking member and the locking mechanism of the seat lock device. Accordingly, an entirety of the seat is locked to the vehicle body frame. The locking position adjusting mechanism of the seat lock device is capable of adjusting the height of the locking position of the locking member by the locking mechanism. Consequently, the locking position adjusting mechanism can absorb an accumulated value of a plurality of errors including dimensional errors of the respective components and errors in the connecting positions between the components. Therefore, the seat lock device can cause the locking mechanism to reliably lock the locking member, without enhancing the dimensional accuracy of the respective components. Therefore, a decline in the productivity of the saddle type vehicle is suppressed while the seat can be reliably locked.

According to an aspect, the locking mechanism may include a holding member which locks the locking member by holding the locking member. In this case, the locking position adjusting mechanism may include a support mechanism movably supporting the holding member and a stopper mechanism arranged to stop at a plurality of positions the holding member that is movable with respect to the supporting mechanism.

According to this arrangement, the holding member arranged to lock the locking member is movably supported by the support mechanism. The holding member is switched between a state in which a movement with respect to the support mechanism is restricted by the stopper mechanism and a state in which the holding member is movable with respect to the support mechanism (a state in which the restriction by the stopper mechanism is released). The stopper mechanism can change the position of the holding member with respect to the support mechanism by stopping the holding member at a plurality of positions. Consequently, the locking position adjusting mechanism can adjust the height of the position (locking position) at which the locking member is locked by the holding member. Therefore, the seat lock device can cause the locking mechanism to reliably lock the locking member, without enhancing the dimensional accuracy of the respective components.

According to an aspect, the stopper mechanism may be arranged such that a stop of movement of the holding member by the stopper mechanism is released between the plurality of positions by the locking member being pressed against the holding member as a result of a relative movement between the vehicle body frame and the seat.

According to this arrangement, when the seat is mounted on the vehicle body frame, the seat and the vehicle body frame move relatively, and the locking member is pressed against the holding member. The holding member is movably supported by the support mechanism, and a movement of the holding member with respect to the support mechanism is stopped by the stopper mechanism. The movement stop of the holder member by the stopper mechanism is released between a plurality of positions by the locking member being pressed against the holding member. That is, when the locking member is pressed against the holing member, the holding member moves between the plurality of positions with respect to the support mechanism, and the locking position is adjusted in the course thereof. In other words, the locking position is adjusted in the course of the seat being mounted on the vehicle body frame. Consequently, in a state where the seat is mounted on the vehicle body frame, the locking position has been adjusted, and the locking member is reliably locked at the locking position by the holding member. Therefore, the seat lock device can cause the locking mechanism to reliably lock the locking member, without enhancing the dimensional accuracy of the respective components.

According to an aspect, the locking position adjusting mechanism may be capable of adjusting the height of the locking position in only either one direction of the upper direction and lower direction. Specifically, the locking position adjusting mechanism may include a ratchet mechanism or stopper piece which adjusts the height of the locking position in only the one direction. The upper direction and lower direction may be either vertical directions or directions inclined with respect to the vertical direction. That is, the upper direction is a direction having an upward component (an upward vector), and the lower direction is a direction having a downward component (a downward vector).

For example, when the locking mechanism is provided on the vehicle body frame, the locking member is lowered toward the locking mechanism together with a portion of the seat. Consequently, in this case, the locking position adjusting mechanism may be capable of adjusting the height of the locking position in only the lower direction. In this case, by lowering the locking member, the height of the locking position can be adjusted. Further, in this case, because the locking position cannot be adjusted in the upper direction, even if the locking member is raised, the height of the locking position does not change. Therefore, the height of the locking position can be stabilized.

According to an aspect, the support mechanism may include a support shaft supporting the holding member so as to be rotatable up and down. In this case, the stopper mechanism may include a ratchet mechanism arranged to stop the holding member at a plurality of rotation positions. The ratchet mechanism may include an engaging portion including a plurality of teeth, a pawl portion arranged to engage with the engaging portion, and a spring pressing the engaging portion and pawl portion against each other. Moreover, the spring may be either a tension spring or a compression spring.

According to this arrangement, the holding member arranged to lock the locking member is supported by the support shaft so as to be rotatable up and down. The holding member is switched between a state in which a rotation with respect to the support shaft is restricted by the stopper mechanism and a state in which the holding member is rotatable with respect to the support shaft (a state in which the restriction by the stopper mechanism is released). The stopper mechanism can change the position of the holding member with respect to the support shaft by stopping the holding member at a plurality of rotation positions. Consequently, the locking position adjusting mechanism can adjust the height of the position (locking position) at which the locking member is locked by the holding member. Therefore, the seat lock device can cause the locking mechanism to reliably lock the locking member, without enhancing the dimensional accuracy of the respective components.

According to an aspect, the pawl portion may be connected to the lock release device, and driven by the lock release device so that engagement between the engaging portion and the pawl portion is released.

According to this arrangement, the lock release device arranged to release a lock of the seat is connected to the pawl portion of the ratchet mechanism. When a rider operates the lock release device, the pawl portion is driven by the lock release device, and the pawl portion separates from the engaging portion. Accordingly, engagement between the engaging portion and the pawl portion is released, and a lock of the seat by the seat lock device is released.

According to an aspect, a distance (the shortest distance) from an engagement position between the engaging portion and the pawl portion to a rotation axis of the pawl portion when viewed in a direction along the rotation axis of the pawl portion may be shorter than a distance (the shortest distance) from the engagement position to a rotation axis of the engaging portion when viewed in a direction along the rotation axis of the engaging portion. In this case, the rotation axis of the pawl portion and the rotation axis of the engaging portion may be either axes parallel to each other or axes inclined with respect to each other.

According to this arrangement, the distance (hereinafter, referred to as a "distance D1") from the engagement position between the engaging portion and the pawl portion to the rotation axis of the pawl portion is short. Specifically, the distance D1 is shorter than the distance from the engagement position between the engaging portion and the pawl portion to the rotation axis of the engaging portion. The pawl portion is driven by the lock release device. If the distance D1 is long, it is necessary to apply a large force to the pawl portion when releasing engagement between the engaging portion and the pawl portion. Consequently, by setting the distance D1 short, engagement between the engaging portion and the pawl portion can be released with a small force.

According to an aspect, a rotation axis of the engaging portion and a rotation axis of the pawl portion may be disposed on opposite sides to each other with respect to the locking position of the locking member by the locking mechanism in a direction perpendicular to at least one of the rotation axis of the engaging portion and the rotation axis of the pawl portion. In contrast thereto, a rotation axis of the engaging portion and a rotation axis of the pawl portion may be disposed on the same side with respect to a locking position of the locking member by the locking mechanism in a direction perpendicular to at least one of the rotation axis of the engaging portion and the rotation axis of the pawl portion. The direction perpendicular to at least one of the rotation axis of the engaging portion and the rotation axis of the pawl portion may be either a vehicle width direction (a left-right direction) or a direction inclined with respect to the vehicle width direction.

According to an aspect, the support mechanism may include a slide mechanism supporting the holding member so as to be slidable in an up-down direction. In this case, the stopper mechanism may be arranged to stop at a plurality of heights the holding member that is slidable in the up-down direction with respect to the support mechanism.

According to this arrangement, the holding member arranged to lock the locking member is supported by the slide mechanism so as to be slidable in the up-down direction. The holding member is switched between a state in which a movement with respect to the slide mechanism is restricted by the stopper mechanism and a state in which the holding member is slidable in the up-down direction with respect to the slide mechanism (a state in which the restriction by the stopper mechanism is released). The stopper mechanism can change the position of the holding member with respect to the slide mechanism by stopping the holding member at a plurality of positions. Consequently, the locking position adjusting mechanism can adjust the height of the position (locking position) at which the locking member is locked by the holding member. Therefore, the seat lock device can cause the locking mechanism to reliably lock the locking member, without enhancing the dimensional accuracy of the respective components.

According to an aspect, the stopper mechanism may be arranged such that fixation of the holding member in the up-down direction with respect to the support mechanism is released by a releasing member removably mounted on the stopper mechanism.

According to this arrangement, when the releasing member is mounted on the stopper mechanism, fixation of the holding member by the stopper mechanism is released. Moreover, when the releasing member is dismounted from the stopper mechanism, a movement of the holding member with respect to the support mechanism is restricted by the stopper mechanism. Consequently, the holding member is switched, by mounting and dismounting of the releasing member, between a state in which a movement with respect to the slide mechanism is restricted by the stopper mechanism and a state in which the holding member is slidable in the up-down direction with respect to the slide mechanism. Consequently, the height of the position (locking position) at which the locking member is locked by the holding member can be stabilized by dismounting the releasing member from the stopper mechanism.

According to an aspect, the locking mechanism may be provided on the vehicle body frame, and the locking position adjusting mechanism may be provided on the locking mechanism.

According to an aspect, the saddle type vehicle may further include a storage box disposed under the seat, and the storage box may have an opening portion to be opened and closed by the seat.

According to an aspect, the seat connecting device may include a hinge rotatably connecting the seat to the vehicle body frame.

According to an aspect, the saddle type vehicle may further include a fuel tank disposed under the seat.

According to an aspect, the seat connecting device may connect a front portion of the seat to the vehicle body frame. In this case, the seat lock device may lock a rear portion of the seat to the vehicle body frame.

According to this arrangement, the seat connecting device connects the front portion of the seat to the vehicle body frame, and the seat lock device locks the rear portion of the seat to the vehicle body frame. Therefore, the gap between the seat connecting device and the seat lock device (the gap in the horizontal direction) is larger than that when the motorcycle includes a plurality of seat lock devices. The larger the gap between the seat connecting device and the seat lock device, the easier variation in the height difference between the seat connecting device and the seat lock device increases. Consequently, by using the seat lock device including the locking position adjusting mechanism in an arrangement such that the seat is connected to the vehicle body frame at two front and rear sites, the effect of the locking position adjusting mechanism can be sufficiently exerted.

The above and other objects, features, and advantages of the present invention will become more apparent from the following description of preferred embodiments with reference to the accompanying drawings.

### BRIEF DESCRIPTION OF THE DRAWINGS

FIG. 1 is a transparent schematic side view of the interior of a motorcycle according to a first preferred embodiment.
FIG. 2 is a schematic longitudinal sectional view of a seat included on the motorcycle.
FIG. 3 is a schematic side view of a seat connecting device.
FIG. 4 is a sectional view of the seat connecting device taken along a line IV-IV shown in FIG. 3.
FIG. 5 is a perspective view of a locking mechanism.
FIG. 6 is an exploded perspective view of the locking mechanism.
FIG. 7 is a front view of a seat lock device.
FIG. 8A is a front view for explaining an operation for adjusting the height of a locking position.
FIG. 8B is a front view for explaining an operation for adjusting the height of a locking position.
FIG. 8C is a front view for explaining an operation for adjusting the height of a locking position.
FIG. 8D is a front view for explaining an operation for adjusting the height of a locking position.
FIG. 8E is a front view for explaining an operation for adjusting the height of a locking position.
FIG. 8F is a front view for explaining an operation for adjusting the height of a locking position.
FIG. 9 is a front view of a seat lock device according to a second preferred embodiment.
FIG. 10 is a side view of the seat lock device viewed in a direction of the arrow X shown in FIG. 9.
FIG. 11A is a front view for explaining an operation for adjusting the height of a locking position.
FIG. 11B is a front view for explaining an operation for adjusting the height of a locking position.
FIG. 11C is a front view for explaining an operation for adjusting the height of a locking position.
FIG. 12 is a front view of a seat lock device according to a third preferred embodiment, showing a state in which a locking mechanism is held at an upper position.
FIG. 13 is a front view of a base plate.
FIG. 14 is a front view of a holding plate, a stopper plate, and a tension spring.
FIG. 15 is a front view of the seat lock device showing a state in which the locking mechanism is held at a lower position.
FIG. 16 is a sectional view of the seat lock device taken along a line XVI-XVI shown in FIG. 15.
FIG. 17 is a plan view of a base plate, a holding plate, a stopper plate, and a slide plate.
FIG. 18 is a sectional view of the seat lock device taken along a line XVIII-XVIII shown in FIG. 12.
FIG. 19 is a front view of the slide plate.
FIG. 20 is a perspective view of a stopper piece.
FIG. 21A is a sectional view for explaining an operation for adjusting the height of a locking position.
FIG. 21B is a sectional view for explaining an operation for adjusting the height of a locking position.
FIG. 21C is a sectional view for explaining an operation for adjusting the height of a locking position.

### DETAILED DESCRIPTION OF THE PREFERRED EMBODIMENTS

The front-rear, up-down (upper/lower), and left-right directions in the following description are defined on the basis of a viewpoint of a forward-facing rider of the motorcycle 1, which is an example of a saddle type vehicle, in a reference posture in which the motorcycle 1 travels straight ahead on a horizontal plane. The left-right direction corresponds to a vehicle width direction.

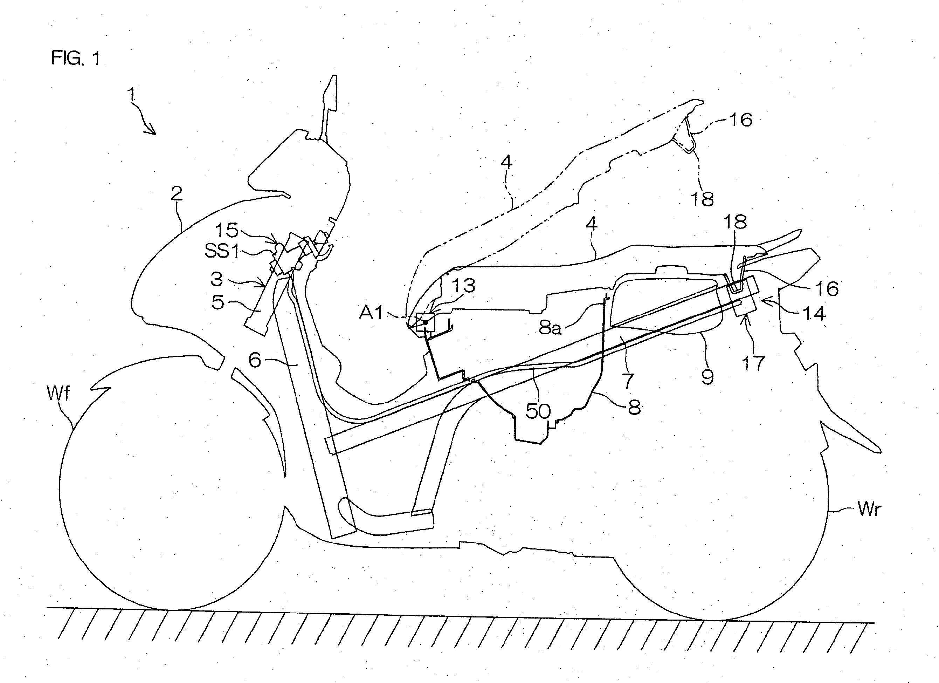

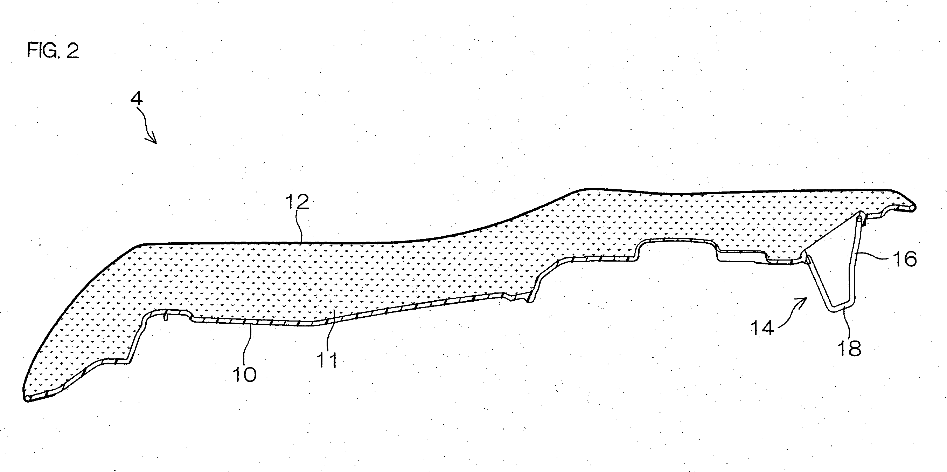

FIG. 1 is a transparent schematic side view of the interior of a motorcycle 1 according to a first preferred embodiment. FIG. 2 is a schematic longitudinal sectional view of a seat 4 included on the motorcycle 1. In the following, description will be given of an example where the saddle type vehicle is a scooter type motorcycle 1.

As shown in FIG. 1, the motorcycle 1 includes a front wheel Wf and a rear wheel Wr, an engine (an internal combustion engine) which produces power, and a key cylinder SS1 being an example of a starter switch to be operated in order to start the engine. Further, the motorcycle 1 includes a vehicle body frame 3 covered with a cover 2 and a saddle type seat 4 disposed over the vehicle body frame 3. The vehicle body frame 3 includes a head pipe 5 in which a steering shaft that rotates together with the front wheel Wf is inserted, a main frame 6 extending rearward obliquely downwardly from the head pipe 5, and a pair of left and right seat frames 7 extending rearward from the main frame 6. The seat 4 is disposed over the pair of seat frames 7.

As shown in FIG. 1, the motorcycle 1 further includes a storage box 8 opening upward and a fuel tank 9 which houses fuel to be fed to the engine. The storage box 8 and the fuel tank 9 are disposed under the seat 4. The storage box 8 and the fuel tank 9 are connected to the vehicle body frame 3, and supported by the vehicle body frame 3. The pair of seat frames 7 are disposed on the left and right of the storage box 8. The storage box 8 is disposed in front of the fuel tank 9. The fuel tank 9 is not limited to being disposed at the rear of the storage box 8, and may be disposed at a more forward position than that of the storage box 8. For example, the fuel tank 9 may be disposed under a footboard on which the feet of a rider seated on the seat 4 are placed to increase the capacity of the storage box 8.

As shown in FIG. 2, the seat 4 includes a plate-shaped seat bottom 10 composing a bottom portion of the seat 4, a sponge-like cushion 11 disposed over the seat bottom 10, and a skin 12 covering the cushion 11. The seat bottom 10 is made of a material that is higher in rigidity than the cushion 11 and the skin 12 such as resin, and the skin 12 is made of a stretching material such as vinyl. The cushion 11 is disposed on the seat bottom 10. The surface of the cushion 11 is covered with the skin 12. The edge of the skin 12 runs under the seat bottom 10. The edge of the skin 12 is fixed to the seat bottom 10 at a plurality of sites by a plurality of staples with the skin 12 stretched so as not to create wrinkles. Therefore, the tension of the skin 12 is applied to the seat bottom 10, so that the seat bottom 10 is elastically deformed. Consequently, the seat 4 is elastically deformed with a different amount of deformation specific to the seat 4.

As shown in FIG. 1, the motorcycle 1 includes a seat connecting device 13 connecting a front portion of the seat 4 to the vehicle body frame 3, a seat lock device 14 arranged to lock a rear portion of the seat 4 to the vehicle body frame 3, and a lock release device 15 arranged to release a lock of the seat 4 by a locking mechanism 17.

As shown in FIG. 1, the seat connecting device 13 rotatably connects a front portion of the seat 4 to the vehicle body frame 3, and the seat lock device 14 dismountably connects a rear portion of the seat 4 to the vehicle body frame 3. The front portion of the seat 4 is connected to the vehicle body frame 3 in a state where the front portion is not dismountable from the vehicle body frame 3, and the rear portion of the seat 4 is connected to the vehicle body frame 3 in a state where the rear portion is dismountable from the vehicle body frame 3. The front portion of the seat 4 is rotatable up and down with respect to the vehicle body frame 3 about an opening and closing axis A1 (an axis inclined at an angle of less than 90 degrees with respect to a horizontal axis or a horizontal plane) inclined with respect to the vertical direction. The seat 4 is movable up and down about the opening and closing axis A1 between a closing position (the position shown by a solid line in FIG. 1) where an opening portion 8a of the storage box 8 is closed and an opening position (the position shown by an alternate long and two short dashed line in FIG. 1) where the opening portion 8a of the storage box 8 is opened. Consequently, the opening portion 8a of the storage box 8 is opened and closed by the seat 4.

As shown in FIG. 1, the seat lock device 14 locks the rear portion of the seat 4 on the vehicle body frame 3 with the seat 4 located at the closing position. In the state where the rear portion of the seat 4 is locked to the vehicle body frame 3, an entirety of the seat 4 is locked to the vehicle body frame 3 by the seat lock device 14 so as to be incapable of opening and closing. The seat lock device 14 includes a locking member 16 and a locking mechanism 17 arranged to lock the locking member 16. The locking member 16 is provided on the seat 4, and the locking mechanism 17 is provided on the vehicle body frame 3. The locking member 16 may be provided on the vehicle body frame 3, and the locking mechanism 17 may be provided on the seat 4. The seat lock device 14 locks the seat 4 to the vehicle body frame 3 by causing the locking mechanism 17 to lock the locking member 16 in state where the front portion of the seat 4 is connected to the vehicle body frame 3 by the seat connecting device 13.

As shown in FIG. 1, the locking member 16 is connected to the rear portion of the seat 4, and the locking mechanism 17 is connected to the vehicle body frame 3. The locking member 16 projects downward from the seat 4. The locking member 16 is composed of, for example, a U-shaped shaft opening upward. The locking member 16 is fixed to the seat bottom 10 by, for example, insert molding. Consequently, the locking member 16 moves up and down about the opening and closing axis A1 together with the rear portion of the seat 4. The locking member 16 includes a locking bar 18 composing a bottom portion of the locking member 16. The locking bar 18 is locked on the locking mechanism 17. The locking mechanism 17 switches between a locked state where the locking member 16 is locked and an unlocked state where the lock of the locking member 16 is released. Therefore, the locking member 16 is dismountably locked on the locking mechanism 17.

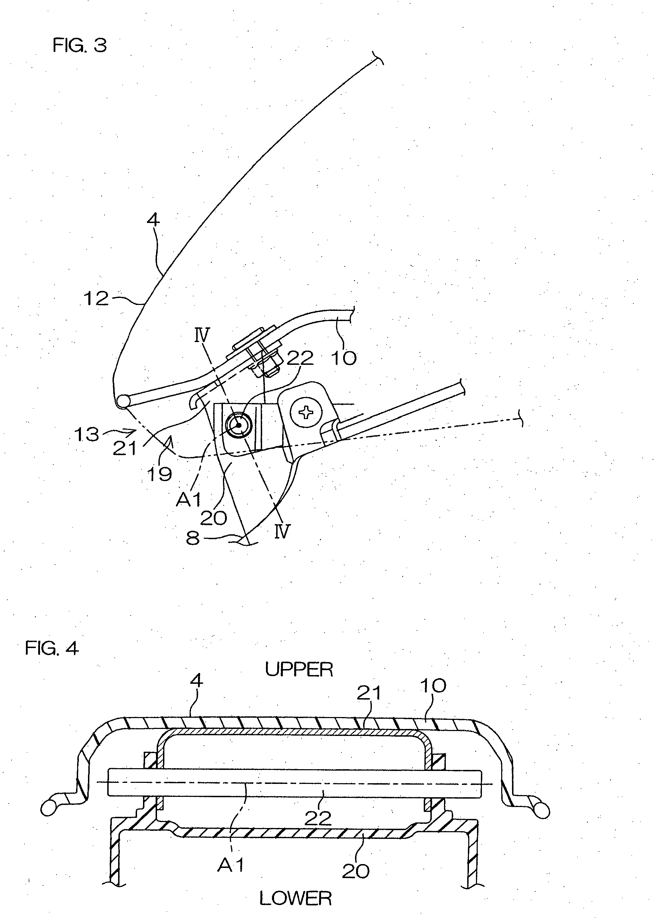

FIG. 3 is a schematic side view of the seat connecting device 13. FIG. 4 is a sectional view of the seat connecting device 13 taken along a line IV-IV shown in FIG. 3. In FIG. 3, a state in which the seat 4 is located at the closing position is shown.

As shown in FIG. 3, the seat connecting device 13 connects the front portion of the seat 4, via the storage box 8 etc., to the vehicle body frame 3 at a constant height (a height with respect to the vehicle body frame 3). The seat connecting device 13 includes a hinge 19 rotatably connecting the seat 4 to the vehicle body frame 3 at a constant height. The hinge 19 is disposed under the front portion of the seat 4. The hinge 19 includes a fixed bracket 20 fixed to the vehicle body frame 3, a movable bracket 21 movable with respect to the vehicle body frame 3, and a hinge shaft 22 connecting the fixed bracket 20 and the movable bracket 21 so as to be relatively rotatable about the opening and closing axis A1.

As shown in FIG. 4, the fixed bracket 20 includes a U-shaped connecting portion opening upward, and the movable bracket 21 includes a U-shaped connecting portion opening downward. The connecting portion of the fixed bracket 20 and the connecting portion of the movable bracket 21 are mutually connected at two left and right sites by the hinge shaft 22. The fixed bracket 20 and the movable bracket 21 are connected so as to be relatively rotatable about a central axis of the hinge shaft 22, that is, the opening and closing axis A1.

As shown in FIG. 3, the fixed bracket 20 is connected to the storage box 8 by a bolt, and the movable bracket 21 is connected to the seat bottom 10 by a bolt. Consequently, the front portion of the seat 4 is connected to the vehicle body frame 3 via multiple interposing members, that is, the fixed bracket 20, the movable bracket 21, the hinge shaft 22, and the storage box 8. Each of the plurality of interposing members has a slight dimensional error. When there are a large number of interposing members, due to accumulation of the dimensional errors of the respective interposing members, a large error (an accumulated value of dimensional errors) as a whole occurs. Therefore, the positional relationship between the front portion of the seat 4 and the vehicle body frame 3 is different vehicle by vehicle.

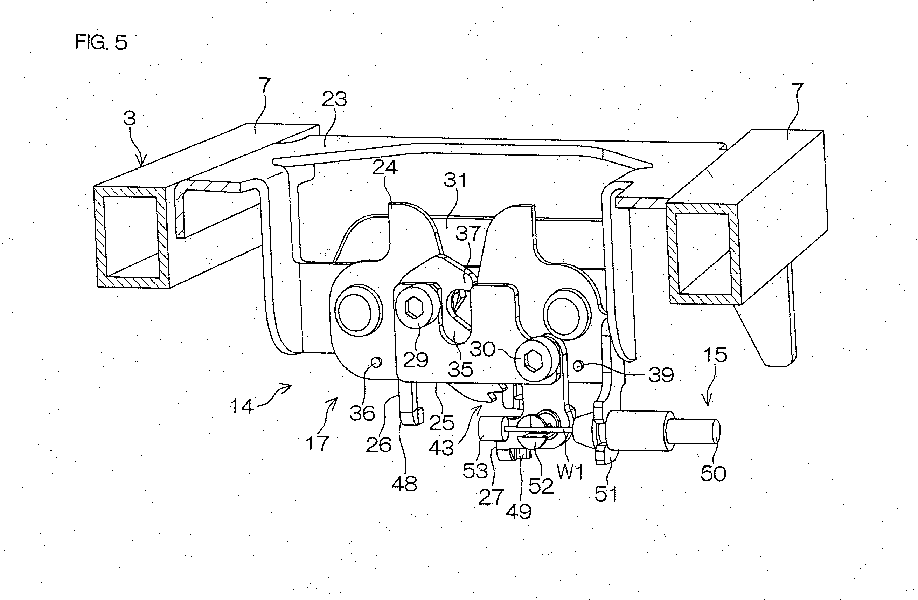

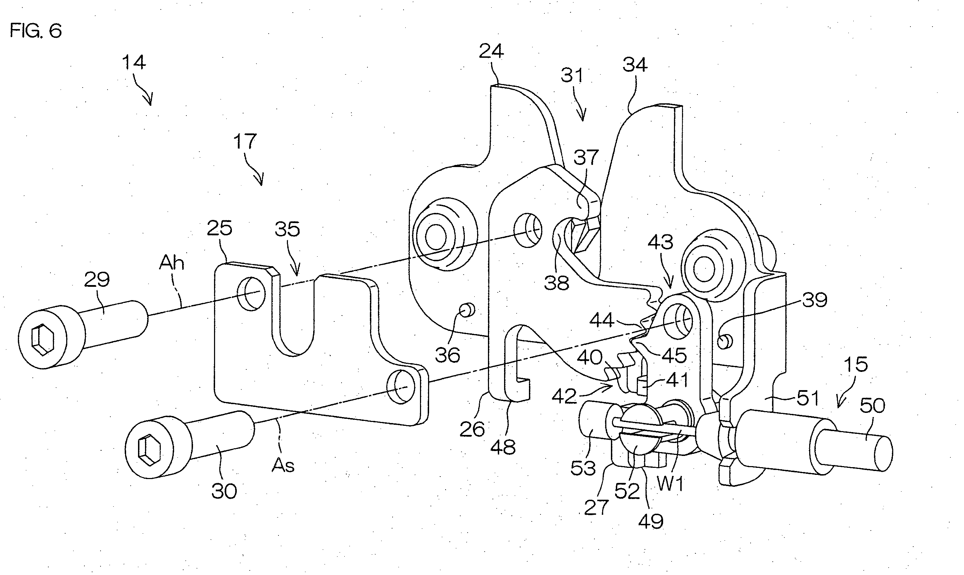

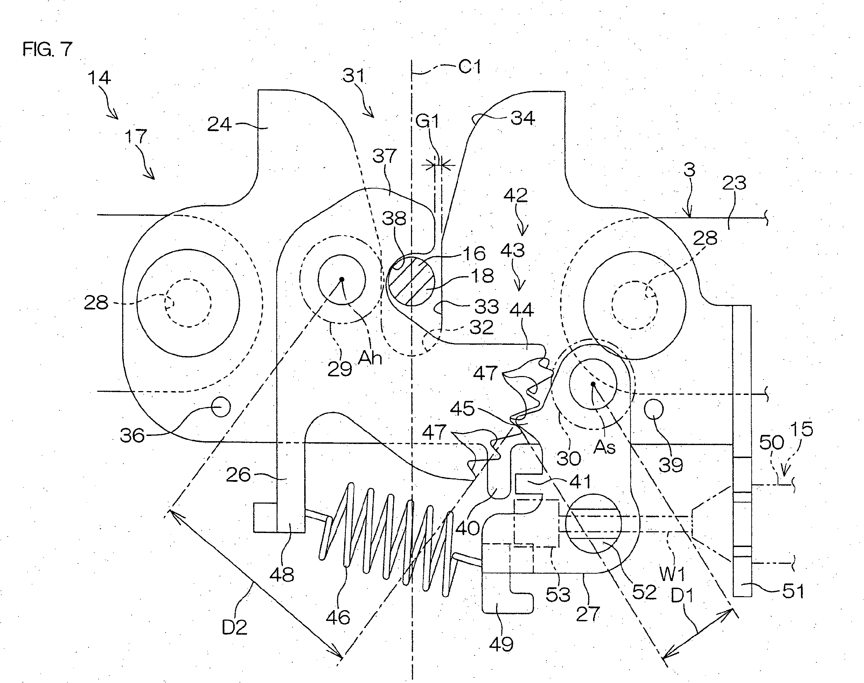

FIG. 5 is a perspective view of the locking mechanism 17. FIG. 6 is an exploded perspective view of the locking mechanism 17. FIG. 7 is a front view of the seat lock device 14. In FIG. 5 and FIG. 6, illustration of a tension spring 46 is omitted. FIG. 7 shows a state in which an auxiliary plate 25 is dismounted, and the locking member 16 is disposed at a locking position.

As shown in FIG. 5, the vehicle body frame 3 includes a crossmember 23 to which the locking mechanism 17 is connected. The pair of seat frames 7 are disposed at a gap in the vehicle width direction (left-right direction), and the crossmember 23 extends from one seat frame 7 to the other seat frame 7. The crossmember 23 connects the pair of seat frames 7 to each other. The crossmember 23 is fixed to the respective seat frames 7 by, for example, welding. The method of fixing the crossmember 23 and the seat frame 7 is not limited to welding, and may be another method such as fixing by a bolt.

As shown in FIG. 5, the locking mechanism 17 includes a base plate 24 fixed to the vehicle body frame 3 and an auxiliary plate 25 opposed in parallel to the base plate 24 at a distance. As shown in FIG. 6, the locking mechanism 17 further includes a holding plate 26 serving as a holding member rotatable with respect to the base plate 24 and arranged to lock the locking member 16 at a plurality of rotation positions, and a stopper plate 27 arranged to stop rotation of the holding plate 26. The holding plate 26 and the stopper plate 27 are disposed along the base plate 24, and opposed to each other in the vehicle width direction. The holding plate 26 and the stopper plate 27 are disposed in portion between the base plate 24 and the auxiliary plate 25.

As shown in FIG. 7, the base plate 24 is fixed to the crossmember 23 by a bolt mounted into a bolt mounting hole 28. The method of fixing the base plate 24 to the crossmember 23 is not limited to fixing by a bolt, and may be another method such as fixing by welding. As shown in FIG. 6, the auxiliary plate 25 is connected to the base plate 24 via a support shaft 29 and a support shaft 30. In FIG. 6, a case in which the support shaft 29 and the support shaft 30 are bolts is shown. The support shaft 29 and the support shaft 30 are not limited to bolts, and may be low-cost members such as rivets. The support shaft 29 and the support shaft 30 extend in the thickness direction of the holding plate 26, and are parallel to each other. One support shaft 29 (the left support shaft 29) penetrates through the base plate 24, the auxiliary plate 25, and the holding plate 26 in the thickness direction, and the other support shaft 30 (the right support shaft 30) penetrates through the base plate 24, the auxiliary plate 25, and the stopper plate 27 in the thickness direction.

As shown in FIG. 6, the base plate 24 defines a main guide groove 31 arranged to guide the locking member 16. Similarly, the auxiliary plate 25 defines a sub-guide groove 35 arranged to guide the locking member 16. The main guide groove 31 and the sub-guide groove 35 are opened upward, and overlapped with each other when viewed in the thickness direction of the holding plate 26. The opening portion of the sub-guide groove 35 is disposed at a position lower than that of the opening portion 34 of the main guide groove 31. As shown in FIG. 7, the main guide groove 31 has a shape that is symmetrical with regard to a center C1 in the width direction of the main guide groove 31. Similarly, the sub-guide groove 35 has a shape that is symmetrical with regard to the widthwise center C1. The widthwise center C1 is a plane that is perpendicular to the width direction of the main guide groove 31, and divides the main guide groove 31 into equal portions in the width direction.

As shown in FIG. 7, the width of the main guide groove 31 is wider at any position than the diameter of the locking bar 18. Similarly, the width of the sub-guide groove 35 is wider at any position than the diameter of the locking bar 18. The width of the opening portion 34 of the main guide groove 31 is wider than the width at another position of the main guide groove 31, and the width of a bottom portion 32 of the main guide groove 31 is narrower than the width at another position of the main guide groove 31. The main guide groove 31 includes a bottom portion 32 in an arc shape opening upward, an intermediate portion 33 extending upward from the bottom portion 32 and having a constant width, and an opening portion 34 extending upward from the intermediate portion 33 and having a wider width as it moves away from the intermediate portion 33. The locking member 16 is, with at least a portion of the locking bar 18 disposed in the main guide groove 31, locked by the holding plate 26.

As shown in FIG. 6, the holding plate 26 is connected to the base plate 24 via the support shaft 29. The holding plate 26 is rotatable about a rotation axis Ah (a central axis of the support shaft 29) with respect to the base plate 24. A rotation angle of the holding plate 26 is restricted by the stopper plate 27 and a protrusion 36 projecting to the side of the holding plate 26 from the base plate 24. As shown in FIG. 7, the holding plate 26 includes a C-shaped hook 37 arranged to lock the locking member 16. The hook 37 defines a C-shaped holding groove 38 in which the locking bar 18 of the locking member 16 is disposed. The holding plate 26 is rotatable about the rotation axis Ah between a plurality of locking positions where the holding plate 26 (the hook 37) locks the locking member 16 and an unlocking position where the lock of the locking member 16 by the holding plate 26 is released. The respective locking positions are positions where a gap G1 between a tip portion of the hook 37 and an inner surface of the main guide groove 31 is narrower than the diameter of the locking member 16, and the unlocking position is a position where the gap G1 between the tip portion of the hook 37 and the inner surface of the main guide groove 31 is wider than the diameter of the locking member 16. The plurality of locking positions are positions having different heights.

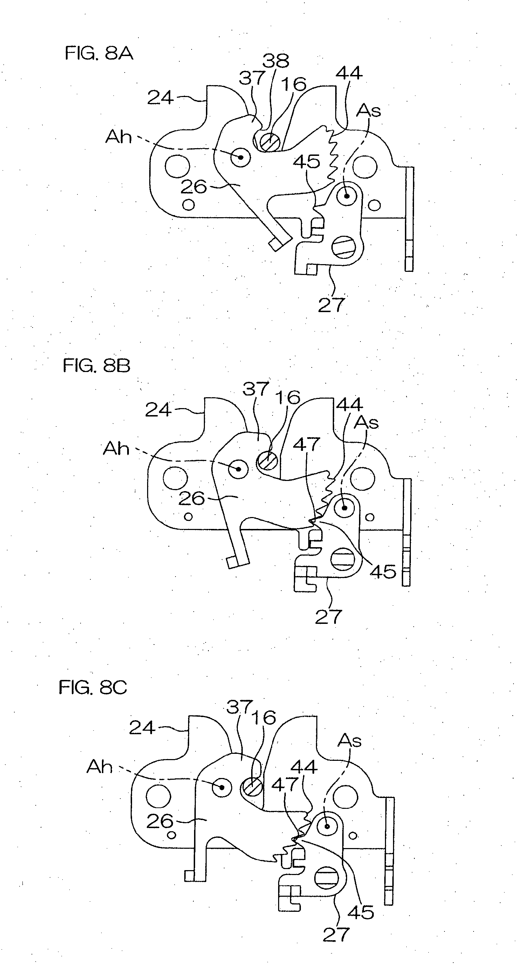

As shown in FIG. 6, the stopper plate 27 is connected to the base plate 24 via the support shaft 30. The stopper plate 27 is rotatable about a rotation axis As (a central axis of the support shaft 30) with respect to the base plate 24. A rotation angle of the stopper plate 27 is restricted by a protrusion 39 projecting to the side of the stopper plate 27 from the base plate 24 and a stopper block 40 projecting downward from the base plate 24. As shown in FIG. 7, the stopper plate 27 includes a contact portion 41 opposed to the stopper block 40. The contact portion 41 is disposed at a position lower than that of the rotation axis As. The stopper plate 27 is rotatable about the rotation axis As between a contact position (the position shown in FIG. 8A) where the contact portion 41 is in contact with the stopper block 40 and a non-contact position where the contact portion 41 is out of contact from the stopper block 40.

As shown in FIG. 7, the rotation axis Ah and the rotation axis As are axes parallel to each other extending in the thickness direction of the holding plate 26. The rotation axis Ah and the rotation axis As are disposed on the sides opposite to each other (opposite sides) with respect to the widthwise center C1. That is, when viewed in the thickness direction (the direction along the rotation axis Ah and the rotation axis As) of the holding plate 26, the widthwise center C1 is disposed between the rotation axis Ah and the rotation axis As. The distance from the rotation axis Ah to the widthwise center C1 when viewed in the thickness direction of the holding plate 26 is shorter than the distance from the rotation axis As to the widthwise center C1 when viewed in the thickness direction of the holding plate 26. When viewed in the thickness direction of the holding plate 26, the rotation axis As is disposed at a position lower than that of the rotation axis Ah. When viewed in the thickness direction of the holding plate 26, the rotation axis Ah is disposed at a position higher than that of the lower end of the main guide groove 31, and the rotation axis As is disposed at a position lower than that of the lower end of the main guide groove 31. Consequently, the rotation axis As is disposed at a position lower than that of the rotation axis Ah.

FIG. 8A to FIG. 8F are front views for explaining an operation for adjusting the height of a locking position. In FIG. 8A to FIG. 8F, illustration of the tension spring 46 etc., is omitted.

As shown in FIG. 7, the seat lock device 14 includes a locking position adjusting mechanism 42 capable of adjusting the height of the locking position of the locking member 16 by the locking mechanism 17, in addition to the locking member 16 and the locking mechanism 17. The locking position adjusting mechanism 42 includes a support shaft 29 serving as a support mechanism supporting the holding plate 26 so as to be rotatable up and down and a ratchet mechanism 43 serving as a stopper mechanism arranged to stop rotation of the holding plate 26 with respect to the support shaft 29 at a plurality of rotation positions.

The ratchet mechanism 43 permits only a rotation of the holding plate 26 in a normal rotation direction (a direction to move away from the unlocking position), and prevents a rotation of the holding plate 26 in a reverse rotation direction (a direction opposite to the normal rotation direction). As shown in FIG. 7, the ratchet mechanism 43 includes an engaging portion 44 composed of a plurality of teeth, a pawl portion 45 arranged to engage with the engaging portion 44, and a tension spring 46 arranged to exert a force in a constant rotation direction to the engaging portion 44. The engaging portion 44 is provided on the holding plate 26, and the pawl portion 45 is provided on the stopper plate 27. The engaging portion 44 and the pawl portion 45 may be provided on the stopper plate 27 and the holding plate 26, respectively. The tension spring 46 is mounted on the stopper plate 27 and the holding plate 26. The tension spring 46 is a coil spring. The tension spring 46 may be a leaf spring.

The engaging portion 44 rotates about the rotation axis Ah together with the holding plate 26. The pawl portion 45 rotates about the rotation axis As together with the stopper plate 27. As shown in FIG. 7, the engaging portion 44 defines a plurality of housing grooves 47 (in FIG. 7, five housing grooves 47). In a state where the engaging portion 44 and the pawl portion 45 are engaged, the pawl portion 45 is disposed in any of the housing grooves 47. The plurality of housing grooves 47 compose rows extending along an arc having a center on the rotation axis Ah. The plurality of housing grooves 47 correspond to the plurality of locking positions, respectively. A front-row housing groove 47 (the lowermost housing groove 47) corresponds to the highest locking position among the plurality of locking positions, and the rearmost housing groove 47 (the uppermost housing groove 47) corresponds to the lowest locking position among the plurality of locking positions. The ratchet mechanism 43 is capable of adjusting the locking positions at multiple stages.

As shown in FIG. 7, the engaging portion 44 and the pawl portion 45 are engaged with each other on the side of the rotation axis As further than the main guide groove 31. Further, the engaging portion 44 and the pawl portion 45 are engaged with each other at a position lower than that of the rotation axis Ah. The holding plate 26 is held at any of the locking positions due to engagement between the engaging portion 44 and the pawl portion 45. The distance from the rotation axis Ah to the engaging portion 44 when viewed in the thickness direction of the holding plate 26 is longer than the distance from the rotation axis As to the pawl portion 45 when viewed in the thickness direction of the holding plate 26. When viewed in the thickness direction of the holding plate 26, the pawl portion 45 is disposed at a position lower than that of the rotation axis As. The distance from the rotation axis Ah to the holding groove 38 of the hook 37 when viewed in the thickness direction of the holding plate 26 is shorter than the distance from the rotation axis Ah to the engaging portion 44 when viewed in the thickness direction of the holding plate 26.

As shown in FIG. 7, the tension spring 46 is mounted on the holding plate 26 and the stopper plate 27 at a position lower than that of the hook 37. The holding plate 26 includes a spring mounting portion 48 at which first end portion of the tension spring 46 is mounted, and the stopper plate 27 includes a spring mounting portion 49 at which second end portion of the tension spring 46 is mounted. The spring mounting portion 48 is provided at a lower end portion of the holding plate 26, and the spring mounting portion 49 is provided at a lower end portion of the stopper plate 27. In a state where the holding plate 26 is disposed at the locking position, the tension spring 46 is under tension in the extending direction, and has elastic deformation. Consequently, in the state where the holding plate 26 is disposed at the locking position, the holding plate 26 is pulled to the side of the unlocking position by the tension spring 46. Further, in this state, the stopper plate 27 is pulled by the tension spring 46 to the side of the contact position where the contact portion 41 of the stopper plate 27 makes contact with the stopper block 40 of the base plate 24.

As shown in FIG. 8A, in a state where the holding plate 26 is disposed at the unlocking position, the holding groove 38 of the hook 37 is opened upward. When the rear portion of the seat 4 is lowered (when the seat 4 is disposed at the closing position) in this state, the locking member 16 is pressed downward against the holding plate 26 as a result of a relative movement between the seat 4 and the vehicle body frame 3. Accordingly, the holding plate 26 rotates in the normal rotation direction (in FIG. 8A, clockwise), and as shown in FIG. 8B, the pawl portion 45 is engaged with the first-stage housing groove 47 (the lowermost housing groove 47). Therefore, the holding plate 26 is disposed at the locking position, and the locking member 16 is locked by the holding plate 26.

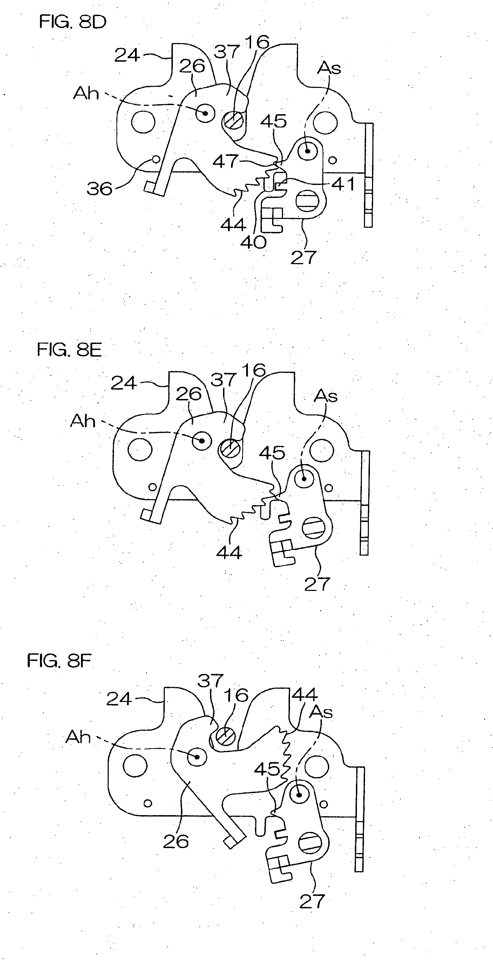

As shown in FIG. 8B to FIG. 8D, when the seat 4 and the vehicle body frame 3 further move relatively and the locking member 16 is further pressed downward against the holding plate 26, the holding plate 26 rotates in the normal rotation direction against the tension spring 46. Specifically, when a torque in the normal rotation direction from the locking member 16 is applied to the holding plate 26 with the pawl portion 45 fitted in the housing groove 47, the holding plate 26 rotates in the normal rotation direction against the tension spring 46, and the pawl portion 45 is fitted in the following housing groove 47. Therefore, the engagement position between the engaging portion 44 and the pawl portion 45 changes, and the holding plate 26 intermittently rotates in the normal rotation direction. Consequently, the locking position of the locking member 16 by the locking mechanism 17 moves downward. Moreover, as shown in FIG. 8D, even when a torque in the normal rotation direction is applied to the holding plate 26 with the pawl portion 45 fitted in the rearmost housing groove 47 (the uppermost housing groove 47), rotation of the holding plate 26 in the normal rotation direction is restricted by the protrusion 36 provided on the base plate 24. Therefore, the pawl portion 45 does not come out of the rearmost housing groove 47.

On the other hand, as shown in FIG. 8D, when a torque in the reverse rotation direction (in FIG. 8D, counterclockwise) is applied to the holding plate 26 with the pawl portion 45 fitted in the housing groove 47, a torque in the direction to press the contact portion 41 of the stopper plate 27 against the stopper block 40 is transmitted to the pawl portion 45 from the engaging portion 44. In the state where the pawl portion 45 is fitted in the housing groove 47, that is, the state where the holding plate 26 is disposed at the locking position, rotation of the stopper plate 27 to the side of the contact portion 41 is restricted. Therefore, in this condition, rotation of the holding plate 26 in the reverse rotation direction is prevented, and the holding plate 26 is held at the locking position. Consequently, even when a torque in the reverse rotation direction is applied to the holding plate 26, the state in which the locking member 16 is locked on the holding plate 26 is maintained.

The closing position of the seat 4 is set so that an upward preload is applied to the locking member 16. Consequently, as shown in FIG. 8B to FIG. 8D, an upper portion of the locking bar 18 is in contact with the hook 37 at any locking position, and pressed against the hook 37. Therefore, in the state where the locking member 16 is locked on the locking mechanism 17, the locking member 16 is hard to move with respect to the locking mechanism 17. Accordingly, vibration of the seat 4 is hard to occur. Further, because the locking member 16 is hard to move with respect to the locking mechanism 17, the occurrence of noise due to a collision between the locking member 16 and the hook 37 can be reduced, and wear of the locking member 16 and the hook 37 can be reduced.

The lock release device 15 is arranged to rotate the stopper plate 27 in a releasing direction (a direction about the rotation axis As toward the side of the non-contact position from the side of the contact position). The lock release device 15 may be a mechanical device that transmits a rider's operation to the stopper plate 27 by a transmitting member such as a wire. Alternatively, the lock release device 15 may be an electrical device including an electromagnetic actuator which produces power to rotate the stopper plate 27 in the releasing direction and a control device which controls the electromagnetic actuator in response to a rider's operation. In the following, description will be given of an example where the lock release device 15 is a mechanical device.

The lock release device 15 includes a key cylinder SS1 (refer to FIG. 1) to be operated by using a key. As shown in FIG. 7, the lock release device 15 further includes a wire W1 connecting the key cylinder SS1 with the stopper plate 27. The wire W1 is disposed in a guide tube 50 extending along the vehicle body frame 3. An end portion of the guide tube 50 is held by a tube holding portion 51 provided on the base plate 24. An end portion of the wire W1 projects to the side of the stopper plate 27 from the end portion of the guide tube 50. The end portion of the wire W1 is mounted at a wire mounting portion 52 provided on the stopper plate 27. Further, at a tip portion of the wire W1, a retainer pin 53 preventing dropout of the wire W1 from the wire mounting portion 52 is mounted. Accordingly, the pawl portion 45 is connected to the lock release device 15.

The pawl portion 45 is driven by the lock release device 15 so that engagement between the engaging portion 44 and the pawl portion 45 is released. Specifically, when the rider performs a releasing operation to the key cylinder SS1 by means of the key, the end portion of the wire W1 moves. As can be understood with reference to FIG. 7, when the end portion of the wire W1 moves in the releasing direction (in FIG. 7, rightward), the retainer pin 53 also moves in the releasing direction, so that the wire mounting portion 52 rotating about the rotation axis As together with the stopper plate 27 is pushed by the retainer pin 53. Therefore, as shown in FIG. 8E, the stopper plate 27 rotates in the releasing direction against the restoring force of the tension spring 46. When the stopper plate 27 rotates in the releasing direction with the engaging portion 44 and the pawl portion 45 engaged with each other, the pawl portion 45 separates from the engaging portion 44. Therefore, as shown in FIG. 8F, the holding plate 26 rotates in the reverse rotation direction due to the restoring force of the tension spring 46, and moves to the unlocking position. Consequently, when a releasing operation is performed with the locking member 16 locked on the locking mechanism 17, the lock of the locking member 16 by the locking mechanism 17 is released, and a lock of the seat 4 with respect to the vehicle body frame 3 is released.

As above, in the first preferred embodiment, the seat 4 disposed over the vehicle body frame 3 is locked on the vehicle body frame 3 by the seat connecting device 13 and the seat lock device 14, and the lock of the seat 4 is released by the lock release device 15. Specifically, a portion of the seat 4 is connected to the vehicle body frame 3 by the seat connecting device 13, while another portion of the seat 4 is locked on the vehicle body frame 3 by the locking member 16 and the locking mechanism 17 of the seat lock device 14. Accordingly, the seat 4 as a whole is locked on the vehicle body frame 3. The locking position adjusting mechanism 42 of the seat lock device 14 is capable of adjusting the height of the locking position of the locking member 16 by the locking mechanism 17. Consequently, the locking position adjusting mechanism 42 can absorb an accumulated value of a plurality of errors including dimensional errors of the respective components and errors in the connecting positions between the components. Therefore, the seat lock device 14 can cause the locking mechanism 17 to reliably lock the locking member 16, without enhancing the dimensional accuracy of the respective components. Therefore, a decline in the productivity of the motorcycle 1 is suppressed while the seat 4 can be reliably locked.

Also in the first preferred embodiment, when the seat 4 is mounted on the vehicle body frame 3, the seat 4 and the vehicle body frame 3 move relatively, and the locking member 16 is pressed against the holding plate 26. The holding plate 26 is movably supported by the support shaft 29 serving as a support mechanism, and a movement of the holding plate 26 with respect to the support shaft 29 is stopped at a plurality of positions by the ratchet mechanism 43 serving as a stopper mechanism. The movement stop of the holding plate 26 by the ratchet mechanism 43 is released by the locking member 16 being pressed against the holding plate 26.

Specifically, when the locking member 16 is pressed against the holding plate 26, the holding plate 26 moves between a plurality of positions with respect to the support shaft 29, and the locking position is adjusted in the course thereof. In other words, the locking position is adjusted in the course of the seat 4 being closed. Consequently, in a state where the seat 4 is closed, the locking position has been adjusted, and the locking member 16 is reliably locked at the locking position by the holding plate 26. Therefore, the seat lock device 14 can cause the locking mechanism 17 to reliably lock the locking member 16, without enhancing the dimensional accuracy of the respective components.

Also in the first preferred embodiment, the ratchet mechanism 43 holds the holding plate 26 so as to be rotatable in only the lower direction, and restricts rotation of the holding plate 26 in the upper direction. That is, the ratchet mechanism 43 is arranged to be able to adjust the height of the locking position in only the lower direction. The locking member 16 is lowered toward the locking mechanism 17 together with a portion of the seat 4. Consequently, by lowering the locking member 16 together with the seat 4, the height of the locking position can be adjusted. Further, because the locking position cannot be adjusted in the upper direction, even if the locking member 16 is raised together with the seat 4, the height of the locking position does not change. Therefore, the height of the locking position can be stabilized.

Also in the first embodiment, as shown in FIG. 7, the distance D1 from the engagement position between the engaging portion 44 and the pawl portion 45 to the rotation axis As of the pawl portion 45 is short. Specifically, the distance D1 is shorter than the distance D2 from the engagement position between the engaging portion 44 and the pawl portion 45 to the rotation axis Ah of the engaging portion 44. The pawl portion 45 is driven by the lock release device 15. If the distance D1 is long, it is necessary to input a large force to the pawl portion 45 when releasing engagement between the engaging portion 44 and the pawl portion 45. Consequently, by setting the distance D1 short, engagement between the engaging portion 44 and the pawl portion 45 can be released with a small force.

Also in the first embodiment, the seat connecting device 13 connects the front portion of the seat 4 to the vehicle body frame 3, and the seat lock device 14 locks the rear portion of the seat 4 on the vehicle body frame 3. Therefore, the gap between the seat connecting device 13 and the seat lock device 14 (the gap in the horizontal direction) is larger than that when the motorcycle 1 includes a plurality of seat lock devices 14. The larger the gap between the seat connecting device 13 and the seat lock device 14, the easier variation in the height difference between the seat connecting device 13 and the seat lock device 14 increases. Consequently, by using the seat lock device 14 including the locking position adjusting mechanism 42 in an arrangement such that the seat 4 is connected to the vehicle body frame 3 at two front and rear sites, the effect of the locking position adjusting mechanism 42 can be sufficiently exerted.

### Second Preferred Embodiment

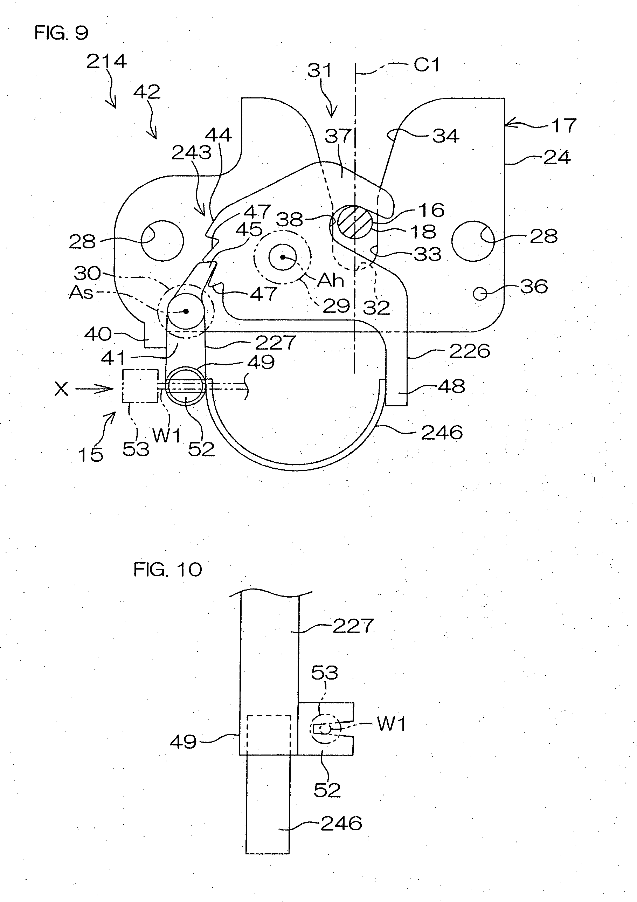

Next, a second preferred embodiment will be described. In the following FIG. 9 to FIG. 11C, component parts equivalent to respective portions shown in FIG. 1 to FIG. 8F above are denoted by the same reference signs as those in FIG. 1 etc., and description thereof will be omitted.

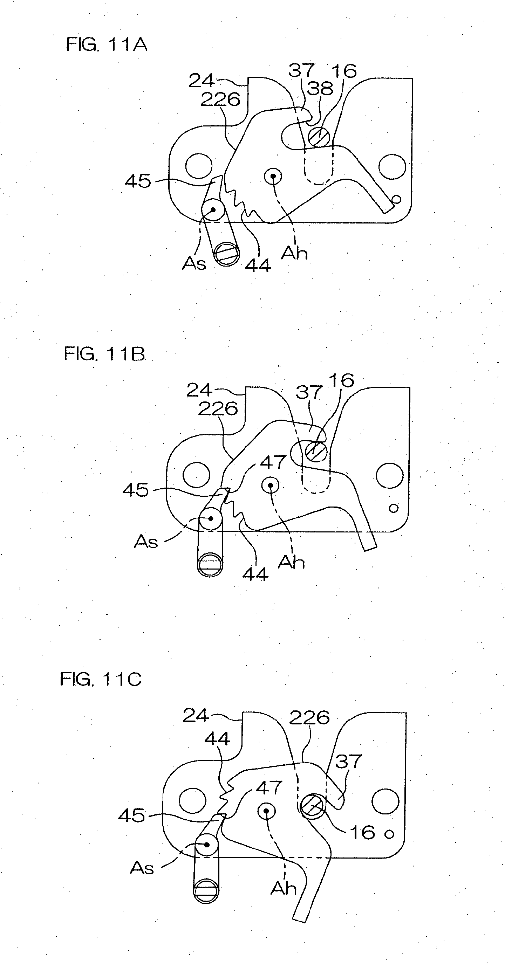

FIG. 9 is a front view of a seat lock device 214 according to a second preferred embodiment. FIG. 10 is a side view of the seat lock device 214 viewed in a direction of the arrow X shown in FIG. 9. FIG. 11A to FIG. 11C are front views for explaining an operation for adjusting the height of a locking position. FIG. 9 shows a state in which a locking member 16 is disposed at a locking position. In FIG. 11A and FIG. 11C, illustration of a compression spring 246 etc., is omitted.

The seat lock device 214 according to the second embodiment has the same configuration as that of the seat lock device 14 according to the first embodiment, except for the holding plate, stopper plate, ratchet mechanism, and tension spring. That is, the seat lock device 214 includes a holding plate 226, a stopper plate 227, a ratchet mechanism 243, and a compression spring 246 in place of the holding plate 26, the stopper plate 27, the ratchet mechanism 43, and the tension spring 46.

As shown in FIG. 9, the holding plate 226 is connected to a base plate 24 via a support shaft 29. The holding plate 226 is rotatable about the rotation axis Ah with respect to the base plate 24. A rotation angle of the holding plate 226 is restricted by a protrusion 36 projecting to the side of the holding plate 226 from the base plate 24 and the stopper plate 227. The holding plate 226 includes a hook 37. The holding plate 226 is rotatable about the rotation axis Ah between a plurality of locking positions where the holding plate 226 locks the locking member 16 and an unlocking position where the lock of the locking member 16 by the holding plate 226 is released.

As shown in FIG. 9, the stopper plate 227 is connected to the base plate 24 via a support shaft 30. The stopper plate 227 is rotatable about the rotation axis As with respect to the base plate 24. A rotation angle of the stopper plate 227 is restricted by a stopper block 40 projecting downward from the base plate 24. The stopper plate 227 includes a contact portion 41 that can make contact with the stopper block 40. The stopper plate 227 is rotatable about the rotation axis As between a contact position where the contact portion 41 is in contact with the stopper block 40 and a non-contact position where the contact portion 41 is out of contact from the stopper block 40.

As shown in FIG. 9, the rotation axis Ah and the rotation axis As are axes parallel to each other extending in the thickness direction of the holding plate 226. The rotation axis Ah and the rotation axis As are disposed on the same side with respect to the widthwise center C1. That is, when viewed in the thickness direction (the direction along the rotation axis Ah and the rotation axis As) of the holding plate 226, the rotation axis Ah is disposed between the rotation axis As and the widthwise center C1. Consequently, the distance from the rotation axis Ah to the widthwise center C1 when viewed in the thickness direction of the holding plate 226 is shorter than the distance from the rotation axis As to the widthwise center C1 when viewed in the thickness direction of the holding plate 226. When viewed in the thickness direction of the holding plate 226, the rotation axis As is disposed at a position lower than that of the rotation axis Ah. When viewed in the thickness direction of the holding plate 226, the rotation axis Ah is disposed at a position higher than that of the lower end of a main guide groove 31, and the rotation axis As is disposed at a position lower than that of the lower end of the main guide groove 31. Consequently, when viewed in the thickness direction of the holding plate 226, the rotation axis As is disposed at a position lower than that of the rotation axis Ah. An engaging portion 44 and a pawl portion 45 of the ratchet mechanism 243 are engaged between the rotation axis Ah and the rotation axis As in terms of the width direction (FIG. 9, the left-right direction) of the main guide groove 31.

As shown in FIG. 9, the compression spring 246 is a U-shaped leaf spring opening upward. The holding plate 226 includes a spring mounting portion 48 at which one end portion of the compression spring 246 is mounted, and the stopper plate 227 includes a spring mounting portion 49 at which the other end portion of the compression spring 246 is mounted. In a state where the holding plate 226 is disposed at the locking position, the compression spring 246 is being compressed to have elastic deformation. Consequently, in this state, the holding plate 226 is pressed to the side of the unlocking position by the compression spring 246. Accordingly, the engaging portion 44 and the pawl portion 45 are pressed against each other. Further, in this state, the stopper plate 227 is pressed by the compression spring 246 to the side of the contact position where the contact portion 41 of the stopper plate 227 makes contact with the stopper block 40 of the base plate 24. As shown in FIG. 10, the wire mounting portion 52 at which a wire W1 is mounted is disposed so as not to overlap the spring mounting portion 49 when viewed in the width direction of the main guide groove 31, and the wire W1 is disposed so as not to overlap the compression spring 246 when viewed in the width direction.

As shown in FIG. 11A, in a state where the holding plate 226 is disposed at the unlocking position, the holding groove 38 of the hook 37 is opened upward. When the rear portion of the seat 4 is lowered (when the seat 4 is disposed at the closing position) in this state, the holding plate 226 is pushed downward by the locking member 16. Accordingly, the holding plate 226 rotates in the normal rotation direction (in FIG. 11A, clockwise), and as shown in FIG. 11B, the pawl portion 45 is engaged with a first-stage housing groove 47 (the uppermost housing groove 47). Accordingly, the holding plate 226 is disposed at the locking position, and the locking member 16 is locked by the holding plate 226. Then, when the holding plate 226 further rotates in the normal rotation direction against the compression spring 246, the pawl portion 45 is fitted in the following housing groove 47, as shown in FIG. 11C.

On the other hand, when a rider performs a releasing operation to a key cylinder SS1 (refer to FIG. 1) by means of a key, the end portion of the wire W1 moves. As can be understood with reference to FIG. 9, when the end portion of the wire W1 moves in the releasing direction (in FIG. 9, rightward), a retainer pin 53 also moves in the releasing direction, so that the wire mounting portion 52 rotating about the rotation axis As together with the stopper plate 227 is pushed by the retainer pin 53. Therefore, the stopper plate 227 rotates in the releasing direction against the restoring force of the compression spring 246. When the stopper plate 227 rotates in the releasing direction with the engaging portion 44 and the pawl portion 45 engaged with each other, the pawl portion 45 separates from the engaging portion 44. Therefore, the holding plate 226 rotates in the reverse rotation direction due to the restoring force of the compression spring 246, and moves to the unlocking position. Consequently, when a releasing operation is performed with the locking member 16 locked on the locking mechanism 17, the lock of the locking member 16 by the locking mechanism 17 is released, and a lock of the seat 4 with respect to the vehicle body frame 3 is released.

### Third Preferred Embodiment

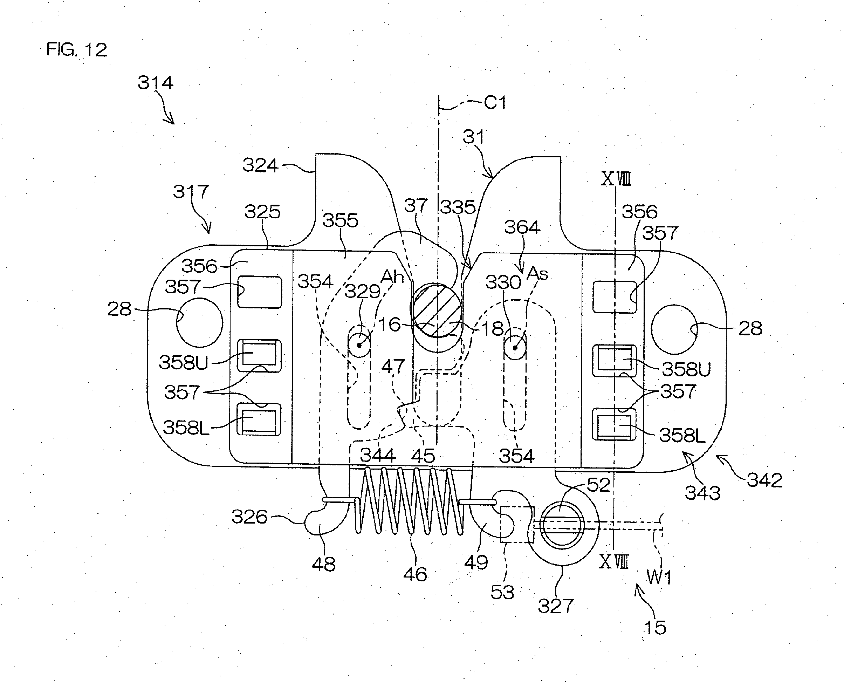

Next, a third preferred embodiment will be described. In the following FIG. 12 to FIG. 21C, component parts equivalent to respective portions shown in FIG. 1 to FIG. 11C above are denoted by the same reference signs as those in FIG. 1 etc., and description thereof will be omitted.

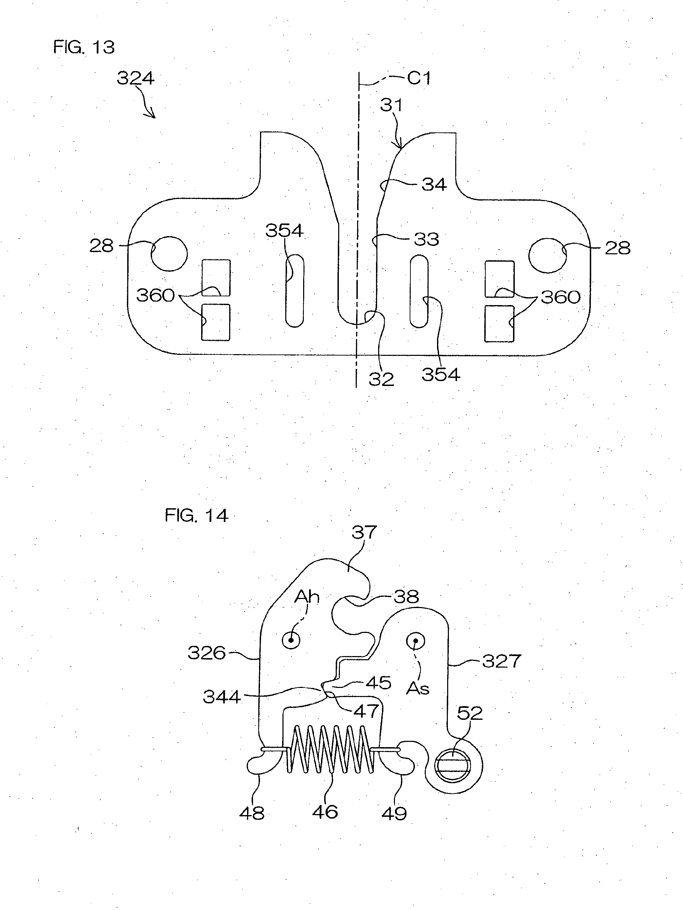

FIG. 12 is a front view of a seat lock device 314 according to a third preferred embodiment, showing a state in which a locking mechanism 317 is held at an upper position. FIG. 13 is a front view of a base plate 324. FIG. 14 is a front view of a holding plate 326, a stopper plate 327, and a tension spring 46. FIG. 12 shows a state in which a locking member 16 is disposed at a locking position.

The seat lock device 314 according to the third embodiment has the same configuration as that of the seat lock device 14 according to the first embodiment, except for the locking mechanism and locking position adjusting mechanism. That is, the seat lock device 314 according to the third preferred embodiment includes a locking mechanism 317 and a locking position adjusting mechanism 342 in place of the locking mechanism 17 and the locking position adjusting mechanism 42 according to the first preferred embodiment.

As shown in FIG. 12, the locking mechanism 317 includes a base plate 324 fixed to the vehicle body frame 3, a holding plate 326 rotatable up and down with respect to the base plate 324, and a stopper plate 327 which stops rotation of the holding plate 326. Further, the locking mechanism 317 includes a tension spring 46 pressing the holding plate 326 and the stopper plate 327 against each other. The holding plate 326 and the stopper plate 327 are disposed along the base plate 324, and opposed to each other.

As shown in FIG. 12, the base plate 324 is dismountably fixed to a crossmember 23 (refer to FIG. 7) by a bolt mounted into a bolt mounting hole 28. The method of fixing the base plate 324 to the crossmember 23 is not limited to fixing by a bolt, and may be another method such as fixing by welding. As shown in FIG. 13, the base plate 324 defines a main guide groove 31 arranged to guide the locking member 16.

As shown in FIG. 12, the holding plate 326 is connected to the base plate 324 via a support shaft 329. The holding plate 326 is rotatable about the rotation axis Ah with respect to the base plate 324. A rotation angle of the holding plate 326 is restricted by a slide plate 325 to be described later. The holding plate 326 includes a C-shaped hook 37 arranged to lock the locking member 16. The holding plate 326 is rotatable about the rotation axis Ah between a locking position where the holding plate 326 locks the locking member 16 and an unlocking position where the lock of the locking member 16 by the holding plate 326 is released.

As shown in FIG. 12, the stopper plate 327 is connected to the base plate 324 via a support shaft 330. The stopper plate 327 is rotatable about the rotation axis As with respect to the base plate 324. A rotation angle of the stopper plate 327 is restricted by the slide plate 325. The stopper plate 327 includes a wire mounting portion 52 mounted with a wire W1 of a lock release device 15. The stopper plate 327 is driven by the lock release device 15 in a releasing direction where fixation of the holding plate 326 by the stopper plate 327 is released.

As shown in FIG. 14, the locking mechanism 317 includes an engaging portion 344 defining a housing groove 47 and a pawl portion 45 arranged to engage with the engaging portion 344. The engaging portion 344 is provided on the holding plate 326, and the pawl portion 45 is provided on the stopper plate 327. The engaging portion 344 and the pawl portion 45 may be provided on the stopper plate 327 and the holding plate 326, respectively. The engaging portion 344 rotates about the rotation axis Ah together with the holding plate 326, and the pawl portion 45 rotates about the rotation axis As together with the stopper plate 327. The holding plate 326 is held at the locking position due to engagement between the engaging portion 344 and the pawl portion 45.

As shown in FIG. 14, one end portion of the tension spring 46 is mounted at the spring mounting portion 48 provided at a lower end portion of the holding plate 326, and the other end portion of the tension spring 46 is mounted at the spring mounting portion 49 provided at a lower end portion of the stopper plate 327. In a state where the holding plate 326 is disposed at the locking position, the tension spring 46 is under tension in the extending direction, and has elastic deformation. Consequently, in the state where the holding plate 326 is disposed at the locking position, the holding plate 326 is under tension of the tension spring 46 to the side of the unlocking position.

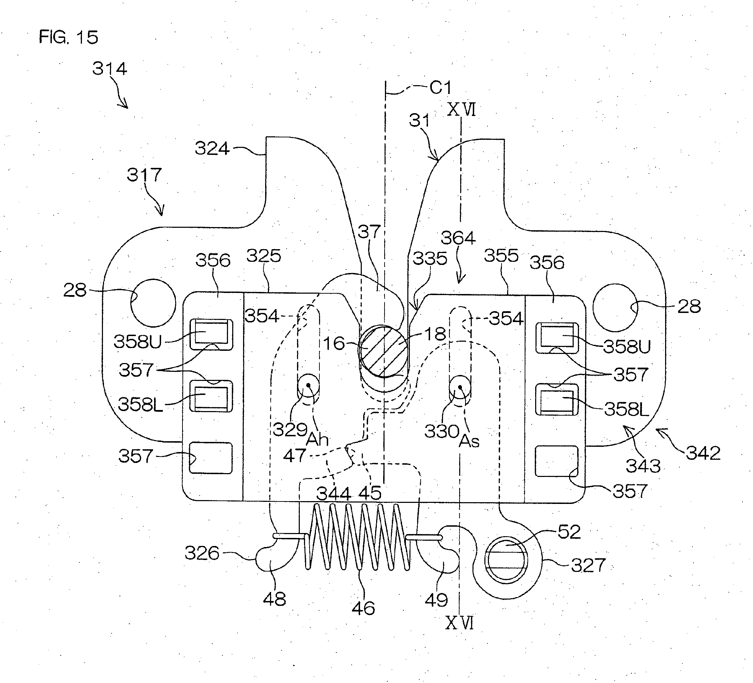

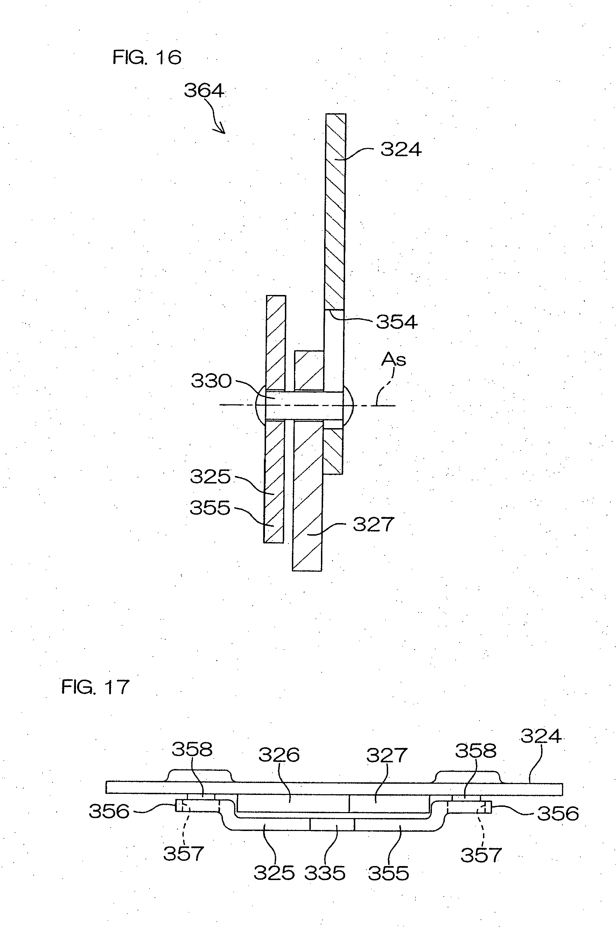

FIG. 15 is a front view of the seat lock device 314 showing a state in which the locking mechanism 317 is held at a lower position. FIG. 16 is a sectional view of the seat lock device 314 taken along a line XVI-XVI shown in FIG. 15. FIG. 17 is a plan view of the base plate 324, the holding plate 326, the stopper plate 327, and the slide plate 325. FIG. 15 shows a state in which the locking mechanism 317 is held at a lower position lower than the upper position, and the locking member 16 is disposed at a locking position.

As shown in FIG. 15, the locking position adjusting mechanism 342 includes a slide mechanism 364 serving as a support mechanism supporting the holding plate 326 so as to be slidable in the up-down direction with respect to the base plate 324. Further, the locking position adjusting mechanism 342 includes a stopper mechanism 343 which stops movement of the holding plate 326 and the stopper plate 327 in the up-down direction with respect to the base plate 324 at a plurality of heights.

As can be understood by comparing FIG. 12 and FIG. 15, the slide mechanism 364 supports the holding plate 326 and the stopper plate 327 so as to be slidable up and down between the upper position (the position shown in FIG. 12) and the lower position (the position shown in FIG. 15). As shown in FIG. 15, the slide mechanism 364 includes a pair of slide holes 354 provided in the base plate 324 and extending in the up-down direction and a support shaft 329 and a support shaft 330 serving as a pair of slide shafts movable in the up-down direction along the pair of slide holes 354. Further, the slide mechanism 364 includes a slide plate 325 connected to the base plate 324 via the support shaft 329 and the support shaft 330.

As shown in FIG. 16, the slide hole 354 penetrates through the base plate 324 in the thickness direction. As shown in FIG. 15, the upper end of the slide hole 354 is disposed at a position higher than that of the lower end of the main guide groove 31, and the lower end of the slide hole 354 is disposed at a position lower than that of the lower end of the main guide groove 31. When viewed in the thickness direction of the holding plate 326, a portion of the main guide groove 31 is disposed midway between the pair of slide holes 354. The slide hole 354 extends parallel to a lower end portion of the main guide groove 31.

As shown in FIG. 15, the support shaft 329 and the support shaft 330 are inserted in the slide holes 354. One support shaft 329 (the left support shaft 329) penetrates through the base plate 324, the holding plate 326, and the slide plate 325 in the thickness direction. The other support shaft 330 (the right support shaft 330) penetrates through the base plate 324, the stopper plate 327, and the slide plate 325 in the thickness direction. The support shaft 329 and the support shaft 330 are capable of moving in the up-down direction with respect to the base plate 324 within the range of the length of the slide holes 354. The holding plate 326, the stopper plate 327, and the slide plate 325 move in the up-down direction together with the support shaft 329 and the support shaft 330. Therefore, the holding plate 326, the stopper plate 327, and the slide plate 325 are capable of moving in the up-down direction with respect to the base plate 324 within the range of the length of the slide holes 354.

As shown in FIG. 16, the slide plate 325 supports the holding plate 326 and the stopper plate 327 via the support shaft 329 and the support shaft 330. As shown in FIG. 17, the slide plate 325 is disposed on the side opposite (opposite side) to the base plate 324 with respect to the holding plate 326 and the stopper plate 327. The slide plate 325 is provided with a recess portion that houses a portion of the holding plate 326 and the stopper plate 327. The slide plate 325 includes a cover portion 355 that houses a portion of the holding plate 326 and the stopper plate 327 and a pair of side portions 356 disposed on the opposed sides of the holding plate 326 and the stopper plate 327. The side portions 356 extend in the up-down direction along the base plate 324.

As shown in FIG. 15, the slide plate 325 defines a sub-guide groove 335 opening upward. The width of the opening portion of the sub-guide groove 335 is wider than the width of a bottom portion of the sub-guide groove 335. When viewed in the thickness direction of the holding plate 326, the main guide groove 31 and the sub-guide groove 335 are overlapped with each other. The opening portion of the sub-guide groove 335 is disposed at a position lower than that of the opening portion of the main guide groove 31, and the bottom portion of the sub-guide groove 335 is disposed at a position higher than that of the lower end of the main guide groove 31. The support shaft 329 and the support shaft 330 are disposed on both sides of the bottom portion of the sub-guide groove 335.

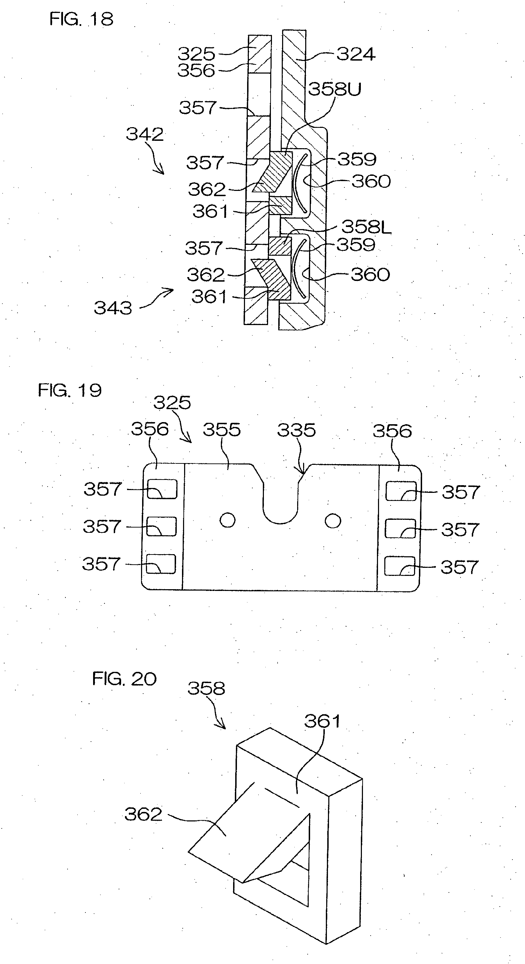

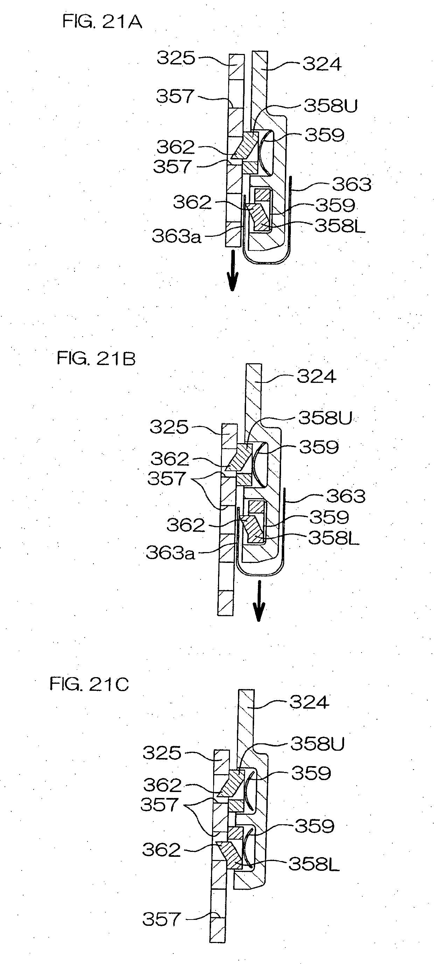

FIG. 18 is a sectional view of the seat lock device 314 taken along a line XVIII-XVIII shown in FIG. 12. FIG. 19 is a front view of the slide plate 325. FIG. 20 is a perspective view of a stopper piece 358. FIG. 21A to FIG. 21C are sectional views for explaining an operation for adjusting the height of a locking position.

A shown in FIG. 18, the stopper mechanism 343 includes a plurality of stopper holes 357 disposed at gaps in the up-down direction and a plurality of stopper pieces 358 which stops movement of the stopper holes 357 by contact with inner surfaces of the stopper holes 357. Further, the stopper mechanism 343 includes a plurality of leaf springs 359 pressing the plurality of stopper pieces 358 against the plurality of stopper holes 357. The stopper holes 357 are provided in the slide plate 325, and the stopper pieces 358 and the leaf springs 359 are held by a plurality of housing recess portions 360 provided in the base plate 324. The stopper holes 357 and the housing recess portions 360 may be provided in the base plate 324 and the slide plate 325, respectively.

As shown in FIG. 19, the plurality of stopper holes 357 are provided in a pair of side portions 356 of the slide plate 325. The plurality of stopper holes 357 compose two rows extending in the up-down direction along the side portions 356. Each row is composed of a plurality of stopper holes 357 disposed at gaps in the up-down direction. In FIG. 19, an example in which each row is composed of three stopper holes 357 is shown. The two rows are disposed in parallel. One row is provided in one side portion 356, and the other row is provided in the other side portion 356.

As shown in FIG. 20, the stopper piece 358 includes a plate-shaped flat portion 361 and an inclined portion 362 inclined with respect to the flat portion 361. As shown in FIG. 18, the flat portion 361 is housed in the housing recess portion 360 in a posture parallel to the base plate 324 and the slide plate 325. The leaf spring 359 is disposed between the flat portion 361 and a bottom surface of the housing recess portion 360. The flat portion 361 is pushed by the leaf spring 359 to the side of the stopper hole 357. The inclined portion 362 projects to the side of the stopper hole 357 from the flat portion 361. A tip portion of the inclined portion 362 is disposed in a corresponding stopper hole 357, and opposed to the inner surface of the stopper hole 357 in the up-down direction.

As shown in FIG. 15, the plurality of stopper pieces 358 include two pairs of stopper pieces 358 corresponding to the two rows composed of the pluralities of stopper holes 357, respectively. Each pair of stopper pieces 358 are composed of an upper stopper piece 358U and a lower stopper piece 358L lined in the up-down direction. As shown in FIG. 18, the upper stopper piece 358U is held in the housing recess portion 360 in a posture where the tip portion of the inclined portion 362 is facing down, and the lower stopper piece 358L is held in the housing recess portion 360 in a posture where the tip portion of the inclined portion 362 is facing up. The slide plate 325 is pushed by the upper stopper piece 358U and the lower stopper piece 358L in a direction to move away from the base plate 324. The base plate 324 and the slide plate 325 are opposed to each other at a gap in the thickness direction.

As can be understood with reference to FIG. 18, the inclined portion 362 of the upper stopper piece 358U can restrict movement in the upper direction of the slide plate 325 by contact with the inner surface of the stopper hole 357, but cannot restrict movement in the lower direction of the slide plate 325. In contrast thereto, the inclined portion 362 of the lower stopper piece 358L can restrict movement in the lower direction of the slide plate 325 by contact with the inner surface of the stopper hole 357, but cannot restrict movement in the upper direction of the slide plate 325. Consequently, a movement in the up-down direction of the slide plate 325 with respect to the base plate 324 is restricted by both of the upper stopper piece 358U and the lower stopper piece 358L. Accordingly, the height of the holding plate 326 and the stopper plate 327 with respect to the base plate 324 is fixed by the stopper mechanism 343.

As shown in FIG. 21A and FIG. 21B, in a development stage or manufacturing stage of the motorcycle 1, a clip 363 being an example of a releasing member is removably mounted on the stopper mechanism 343. The clip 363 has, for example, a U-shape opening upward. The clip 363 includes an interposing portion 363a that is disposed between the base plate 324 and the slide plate 325. In a state where the interposing portion 363a is interposed between the base plate 324 and the slide plate 325, the inclined portion 362 of the lower stopper piece 358L is disposed outside the stopper hole 357 due to elastic deformation of the leaf spring 359. Therefore, the restriction of movement in the lower direction of the slide plate 325 by the lower stopper piece 358L is released. On the other hand, as shown in FIG. 21 B and FIG. 21C, when the clip 363 is dismounted with the inclined portion 362 of the lower stopper piece 358L opposed to the stopper hole 357, the lower stopper piece 358L is pushed by the leaf spring 359, so that the inclined portion 362 of the lower stopper piece 358L enters into the stopper hole 357. Accordingly, a movement in the lower direction of the slide plate 325 with respect to the base plate 324 is restricted.

In FIG. 21A, a state in which the inclined portion 362 of the upper stopper piece 358U is fitted in the middle stopper hole 357, and the inclined portion 362 of the lower stopper piece 358L is pressed against the inside of the housing recess portion 360 by the clip 363 is shown. In this state, when the seat 4 is moved to the side of the closing position and the seat 4 and the vehicle body frame 3 move relatively, the locking member 16 is pressed downward against the holding plate 326. When the holding plate 326 is pressed in the lower direction by the locking member 16, the slide plate 325 moves in the lower direction. Accordingly, as shown in FIG. 21B, the inclined portion 362 of the upper stopper piece 358U is fitted in the uppermost stopper hole 357, and the inclined portion 362 of the lower stopper piece 358L is opposed to the middle stopper hole 357. As shown in FIG. 21C, when the clip 363 is removed from the seat lock device 314 in this state, the inclined portion 362 of the lower stopper piece 358L is fitted in the middle stopper hole 357, so that a movement of the slide plate 325 in the up-down direction is restricted. Accordingly, the height of the locking position of the locking member 16 by the locking mechanism 317 is adjusted in the lower direction.

### Other Preferred Embodiments

Although the first to third preferred embodiments have been described above, the present teaching is not limited to the content of the first to third preferred embodiments, and can be variously modified.

For example, in the first to third embodiments, the number of seat lock devices included on the motorcycle is one. However, the motorcycle may include a plurality of seat lock devices. For example, the motorcycle may include a seat connecting device and two seat lock devices, a front portion of a seat may be connected to the vehicle body frame by the seat connecting device, and a right side portion and a left side portion of the seat may be locked on the vehicle body frame by the two seat lock devices, respectively.

Also, in the first to third embodiments, the seat connecting device connects a portion of the seat to the vehicle body frame in a non-dismountable state. However, the seat connecting device may be arranged to dismountably connect a portion of the seat to the vehicle body frame. Specifically, the seat connecting device may include a U-shaped protrusion provided on one of the vehicle body frame and seat and a hook provided on the other of the vehicle body frame and seat and to be removably mounted at the protrusion at a constant height. According to this arrangement, because both of the seat connecting device and the seat lock device removably connect a portion of the seat to the vehicle body frame, the rider can dismount the seat as a whole from the vehicle body frame.

Also, in the first to third embodiments, the locking member is composed of a U-shaped shaft opening upward. However, the locking member may be not only in a U-shape but also in another shape such as a C-shape or a J-shape. Further, the locking mechanism may be composed not only of a shaft but also of another member such as a plate or a block.

Also, in the first to third embodiments, the holding member included in the locking mechanism is in a plate shape. However, the holding member may be not only in a plate shape but also in another shape such as a block shape. The same applies to the base plate, stopper plate, auxiliary plate, and slide plate.

Also, in the first to third embodiments, the seat connecting device connects a portion of the seat to the vehicle body frame via the interposing member supported on the vehicle body frame. However, the seat connecting device may directly connect a portion of the seat to the vehicle body frame. That is, the seat connecting device may either include an interposing member to be interposed between the seat connecting device and the seat or include no interposing member.

Also, in the first to third embodiments, the saddle type vehicle is a scooter type motorcycle. However, the saddle type vehicle may be a sport type motorcycle, may be an off-road type motorcycle, or may be a moped. Moreover, the saddle type vehicle may be not only a motorcycle but also an all-terrain vehicle or a snowmobile.

## Claims

1. A saddle type vehicle (1) comprising:
a vehicle body frame (3);
a seat (4) disposed over the vehicle body frame (3);
a seat connecting device (13) connecting a portion of the seat (4) to the vehicle body frame (3);
a seat lock device (14, 214, 314) including a locking member (16) provided on one of the vehicle body frame (3) and seat (4), and a locking mechanism (17, 317) arranged to lock the locking member (16) and provided on the other of the vehicle body frame (3) and seat (4), the seat lock device (14, 214, 314) arranged to lock the seat (4) to the vehicle body frame (3) by causing the locking mechanism (17, 317) to lock the locking member (16) in state in which the portion of the seat (4) is connected to the vehicle body frame (3) by the seat connecting device (13); the locking mechanism (17, 317) includes a holding member (26, 326) which locks the locking member (16) by holding the locking member (16), and a lock release device (15) arranged to release a lock of the seat (4) by the seat lock device (14, 214, 314), **characterized in that**
the seat lock device (14, 214, 314) further includes a locking position adjusting mechanism (42, 342) capable of adjusting a height of a locking position at which the locking member (16) is locked by the locking mechanism (17, 317) in a state in which a rear portion of the seat (4) is lowered to the vehicle body frame (3), and
the locking position adjusting mechanism (42, 342) includes a support mechanism (29, 364) movably supporting the holding member (26, 326) and a stopper mechanism (43, 243, 343) arranged to stop movement of the holding member (26, 326) with respect to the support mechanism (29, 364) at a plurality of positions.

2. A saddle type vehicle (1) according to claim 1, **characterized in that** the stopper mechanism (43, 243, 343) is arranged such that a stop of movement of the holding member (26, 326) by the stopper mechanism (43, 243, 343) is released between the plurality of positions by the locking member (16) being pressed against the holding member (26, 326) as a result of a relative movement between the vehicle body frame (3) and the seat (4).

3. A saddle type vehicle (1) according to claim 1 or 2, **characterized in that** the locking position adjusting mechanism (42, 342) is capable of adjusting the height of the locking position in only either one direction of an upper direction and lower direction.

4. A saddle type vehicle (1) according to any one of claims 1 to 3, **characterized in that** the support mechanism (29, 364) includes a support shaft (29) supporting the holding member (26) so as to be rotatable up and down, and
the stopper mechanism (43, 243, 343) includes a ratchet mechanism (43, 243) arranged to stop the holding member (26) at a plurality of rotation positions, preferably the ratchet mechanism (43, 243) includes an engaging portion (44) including a plurality of teeth, a pawl portion (45) arranged to engage with the engaging portion (44), and a spring (46, 246) pressing the engaging portion (44, 344) and pawl portion (45) against each other, preferably the spring (46, 246) includes either a tension spring (46) or a compression spring (246).

5. A saddle type vehicle (1) according to claim 4, **characterized in that** the pawl portion (45) is connected to the lock release device (15), and driven by the lock release device (15) so that engagement between the engaging portion (44, 344) and the pawl portion (45) is released.

6. A saddle type vehicle (1) according to claim 5, **characterized in that** a distance (D1) from an engagement position between the engaging portion (44) and the pawl portion (45) to a rotation axis (As) of the pawl portion (45) is shorter than a distance (D2) from the engagement position to a rotation axis (Ah) of the engaging portion (44).

7. A saddle type vehicle (1) according to any one of claims 4 to 6, **characterized in that** a rotation axis (Ah) of the engaging portion (44) and a rotation axis (As) of the pawl portion (45) are disposed on opposite sides to each other with respect to the locking position of the locking member (16) by the locking mechanism (17).

8. A saddle type vehicle (1) according to any one of claims 4 to 6, **characterized in that** a rotation axis (Ah) of the engaging portion (44) and a rotation axis (As) of the pawl portion (45) are disposed on the same side with respect to the locking position of the locking member (16) by the locking mechanism (17).

9. A saddle type vehicle (1) according to any one of claims 1 to 3, **characterized in that** the support mechanism (29, 364) includes a slide mechanism (364) supporting the holding member (326) so as to be slidable in an up-down direction, and
the stopper mechanism (343) is arranged to stop movement of the holding member (326) in the up-down direction with respect to the support mechanism (364) at a plurality of heights.

10. A saddle type vehicle (1) according to claim 9, **characterized in that** the stopper mechanism (343) is arranged such that fixation of the holding member (326) in the up-down direction with respect to the support mechanism (364) is released by a releasing member (363) removably mounted on the stopper mechanism (343).

11. A saddle type vehicle (1) according to any one of claims 1 to 10, **characterized in that** the locking mechanism (17, 317) is provided on the vehicle body frame (3), and
the locking position adjusting mechanism (42, 342) is provided on the locking mechanism (17, 317).

12. A saddle type vehicle (1) according to any one of claims 1 to 11, **characterized by** a storage box (8) having an opening portion (8a) to be opened and closed by the seat (4), and disposed under the seat (4), wherein the locking position adjusting mechanism (42, 342) is capable of adjusting the height of the locking position in a state in which the opening portion (8a) of the storage box (8) is closed by the seat (4).

13. A saddle type vehicle (1) according to any one of claims 1 to 12, **characterized in that** the seat connecting device (13) includes a hinge (19) rotatably connecting the seat (4) to the vehicle body frame (3).

14. A saddle type vehicle (1) according to any one of claims 1 to 13, **characterized by** a fuel tank (9) disposed under the seat (4).

## Patentansprüche

1. Ein Sattel-Typ-Fahrzeug (1) mit:
einem Fahrzeug-Körper-Rahmen (3);
einem Sitz (4), angeordnet über dem Fahrzeug-Körper-Rahmen (3);
einer Sitz-Verbindungs-Vorrichtung (13), welche einen Abschnitt des Sitz (4) mit dem Fahrzeug-Körper-Rahmen (3) verbindet;
einer Sitz-Verriegelungs-Vorrichtung (14, 214, 314), welche ein Verriegelungs-Element (16) beinhaltet, welches an einem von dem Fahrzeug-Körper-Rahmen (3) und Sitz (4) vorgesehen ist, und einem Verriegelungs-Mechanismus (17, 317), angeordnet um das Verriegelungs-Element (16) zu verriegeln und vorgesehen an dem anderen von dem Fahrzeug-Körper-Rahmen (3) und Sitz (4), die Sitz-Verriegelungs-Vorrichtung (14, 214, 314), angeordnet um den Sitz (4) an dem Fahrzeug-Körper-Rahmen (3) zu verriegeln indem der Verriegelungs-Mechanismus (17, 317) bewirkt, dass das Verriegelungs-Element (16) in einem Zustand verriegelt ist, in dem der Abschnitt des Sitz (4) mit dem Fahrzeug-Körper-Rahmen (3) durch die Sitz-Verbindungs-Vorrichtung (13) verbunden ist; der Verriegelungs-Mechanismus (17, 317) beinhaltet ein Halte-Element (26, 326), welches das Verriegelungs-Element (16) durch Halten des Verriegelungs-Elements (16) verriegelt, und eine Verriegelungs-Löse-Vorrichtung (15), angeordnet eine Verriegelung des Sitz (4) durch die Sitz-Verriegelungs-Vorrichtung (14, 214, 314) zu lösen, **dadurch gekennzeichnet, dass**
die Sitz-Verriegelungs-Vorrichtung (14, 214, 314) weiterhin einen Verriegelungs-Positions-Einstell-Mechanismus (42, 342) beinhaltet, der in der Lage ist, eine Höhe einer Verriegelungsposition in welcher das Verriegelungs-Element (16) durch den Verriegelungs-Mechanismus (17, 317) in einem Zustand verriegelt, in dem eine hinterer Abschnitt des Sitz (4) zu dem Fahrzeug-Körper-Rahmen (3) abgesenkt ist, einstellt; und
der Verriegelungs-Positions-Einstell-Mechanismus (43, 342) beinhaltet einen Lager-Mechanismus (29, 364), welcher das Halte-Element (26, 326) bewegbar lagert, und einen Stopper-Mechanismus (43, 243, 343), angeordnet, um eine Bewegung des Halte-Elements (26, 326) mit Bezug auf den Lager-Mechanismus (29, 364) an einer Mehrzahl von Positionen stoppt.

2. Ein Sattel-Typ-Fahrzeug (1) gemäß Anspruch 1, **dadurch gekennzeichnet, dass** der Stopper-Mechanismus (43, 243, 343) angeordnet ist, sodass ein Stopp der Bewegung des Halte-Elements (26, 326) durch den Stopper-Mechanismus (43, 243, 343) zwischen der Mehrzahl von Positionen gelöst ist, durch das Verriegelungs-Element (16), das gegen das Halte-Element (26, 326) gepresst ist, als ein Ergebnis einer relativen Bewegung zwischen dem Fahrzeug-Körper-Rahmen (3) und dem Sitz (4).

3. Ein Sattel-Typ-Fahrzeug (1) gemäß Anspruch 1 oder 2, **dadurch gekennzeichnet, dass** der Verriegelungs-Positions-Einstell-Mechanismus (42, 342) in der Lage ist, die Höhe der Verriegelungsposition in nur einer Richtung von einer oberen Richtung und einer unteren Richtung einzustellen.

4. Ein Sattel-Typ-Fahrzeug (1) gemäß irgendeinem der Ansprüche 1 bis 3, **dadurch gekennzeichnet, dass** der Lager-Mechanismus (29, 364) eine Lager-Welle (29) beinhaltet, welche das Halte-Element (26) lagert, sodass dieses nach oben und unten drehbar ist, und
der Stopper-Mechanismus (43, 243, 343) beinhaltet einen Klinken-Mechanismus (43, 243), angeordnet, um das Halte-Element (26) an einer Mehrzahl von Drehpositionen zu stoppen, vorzugsweise beinhaltet der Klinken-Mechanismus (43, 243) einen Eingriffsabschnitt (44), welcher eine Mehrzahl von Zähnen beinhaltet, einen Klauenabschnitt (45), angeordnet zum Eingriff mit dem Eingriffsabschnitt (44), und eine Feder (46, 246), welche den Eingriffsabschnitt (44, 344) und den Klauenabschnitt (45) gegeneinander presst, vorzugsweise beinhaltet die Feder (46, 246) entweder eine Zugfeder (46) oder eine Kompressionsfeder (246).

5. Ein Sattel-Typ-Fahrzeug (1) gemäß Anspruch 4, **dadurch gekennzeichnet, dass** der Klauenabschnitt (45) mit dem Verriegelungs-Löse-Vorrichtung (15) verbunden ist, und durch die Verriegelungs-Löse-Vorrichtung (15) angetrieben ist, sodass Eingriff zwischen dem Eingriffsabschnitt (44, 344) und dem Klauenabschnitt (45) gelöst ist.

6. Ein Sattel-Typ-Fahrzeug (1) gemäß Anspruch 4, **dadurch gekennzeichnet, dass** ein Abstand (D1) von der Eingriffsposition zwischen dem Eingriffsabschnitt (44) und dem Klauenabschnitt (45) zu einer Drehachse (As) des Klauenabschnitts (45) kürzer ist als ein Abstand (D2) von der Eingriffsposition zu einer Drehachse (Ah) des Eingriffsabschnitt (44).

7. Ein Sattel-Typ-Fahrzeug (1) gemäß irgendeinem der Ansprüche 4 bis 6, **dadurch gekennzeichnet, dass** eine Drehachse (Ah) des Eingriffsabschnitts (44) und eine Drehachse (As) des Klauenabschnitts (45) an gegenüberliegenden Seiten zueinander mit Bezug auf die Verriegelungsposition des Verriegelungs-Elements (16) durch den Verriegelungs-Mechanismus (17) angeordnet sind.

8. Ein Sattel-Typ-Fahrzeug (1) gemäß irgendeinem der Ansprüche 4 bis 6, **dadurch gekennzeichnet, dass** eine Drehachse (Ah) des Eingriffsabschnitts (44) und eine Drehachse (As) des Klauenabschnitts (45) auf derselben Seite mit Bezug auf die Verriegelungsposition des Verriegelungs-Elements (16) durch den Verriegelungs-Mechanismus (17) angeordnet sind.

9. Ein Sattel-Typ-Fahrzeug (1) gemäß irgendeinem der Ansprüche 1 bis 3, **dadurch gekennzeichnet, dass** der Lager-Mechanismus (29, 364) einen Gleit-Mechanismus (364) beinhaltet, welcher das Halte-Element (326) lagert, sodass dieses gleitbar in einer Oben-Unten-Richtung ist, und
der Stopper-Mechanismus (343) ist angeordnet um Bewegung des Halte-Elements (326) in die Oben-Unten-Richtung mit Bezug auf den Lager-Mechanismus (364) an einer Mehrzahl von Höhen zu stoppen.

10. Ein Sattel-Typ-Fahrzeug (1) gemäß Anspruch 9, **dadurch gekennzeichnet, dass** der Stopper-Mechanismus (343) angeordnet ist, sodass eine Fixierung des Halte-Elements (326) in die Oben-Unten-Richtung mit Bezug auf den Lager-Mechanismus (364) durch ein Löse-Element (363) gelöst ist, das rückbewegbar an dem Stopper-Mechanismus (343) montiert.

11. Ein Sattel-Typ-Fahrzeug (1) gemäß irgendeinem der Ansprüche 1 bis 10, **dadurch gekennzeichnet, dass** der Verriegelungs-Mechanismus (17,317) an dem Fahrzeug-Körper-Rahmen (3) vorgesehen ist, und
der Verriegelungs-Positions-Einstell-Mechanismus (42, 342) an dem Verriegelungs-Mechanismus (17, 317) vorgesehen ist.

12. Ein Sattel-Typ-Fahrzeug (1) gemäß irgendeinem der Ansprüche 1 bis 11, **gekennzeichnet durch** eine Lagerbox (8), die einen Öffnungsabschnitt (8a) hat, welcher **durch** den Sitz (4) geöffnet und geschlossen ist, und unter dem Sitz (4) positioniert ist, wobei der Verriegelungs-Positions-Einstell-Mechanismus (42, 342) in der Lage ist, die Höhe der Verriegelungsposition in einem Zustand einzustellen, in dem der Öffnungsabschnitt (8a) der Lagerbox (8) **durch** den Sitz (4) geschlossen ist.

13. Ein Sattel-Typ-Fahrzeug (1) gemäß irgendeinem der Ansprüche 1 bis 12, **dadurch gekennzeichnet, dass** die Sitz-Verbindungs-Vorrichtung (13) ein Gelenk (19) beinhaltet, welches den Sitz (4) mit dem Fahrzeug-Körper-Rahmen (3) drehbar verbindet.

14. Ein Sattel-Typ-Fahrzeug (1) gemäß irgendeinem der Ansprüche 1 bis 13, **gekennzeichnet durch** einen Kraftstofftank (9), angeordnet unter dem Sitz (4).

## Revendications

1. Véhicule du type à selle (1) comprenant :
un châssis de corps de véhicule (3) ;
un siège (4) disposé au-dessus du châssis de corps de véhicule (3) ;
un dispositif de raccordement de siège (13) raccordant une partie du siège (4) au châssis de corps de véhicule (3) ;
un dispositif de verrou de siège (14, 214, 314) incluant un élément de verrouillage (16) prévu sur un du châssis de corps de véhicule (3) et du siège (4) et un mécanisme de verrouillage (17, 317) agencé pour verrouiller l'élément de verrouillage (16) et prévu sur l'autre du châssis de corps de véhicule (3) et du siège (4), le dispositif de verrou de siège (14, 214, 314) étant agencé pour verrouiller le siège (4) sur le châssis de corps de véhicule (3) en amenant le mécanisme de verrouillage (17, 317) à verrouiller l'élément de verrouillage (16) dans un état dans lequel la partie du siège (4) est reliée au châssis de corps de véhicule (3) par le dispositif de raccordement de siège (13) ; le mécanisme de verrouillage (17, 317) comporte un élément de maintien (26, 326) qui verrouille l'élément de verrouillage (16) en maintenant l'élément de verrouillage (16), et un dispositif de libération de verrou (15) agencé pour libérer le verrouillage du siège (4) par le dispositif de verrou de siège (14, 214, 314), **caractérisé en ce que**
le dispositif de verrou de siège (14, 214, 314) comporte en outre un mécanisme de réglage de position de verrouillage (42, 342) capable de régler la hauteur de la position de verrouillage à laquelle l'élément de verrouillage (16) est verrouillé par le mécanisme de verrouillage (17, 317) dans un état dans lequel la partie arrière du siège (4) est abaissée vers le châssis de corps de véhicule (3), et
le mécanisme de réglage de position de verrouillage (42, 342) comporte un mécanisme support (29, 364) supportant de façon mobile l'élément de maintien (26, 326) et un mécanisme de butée (43, 243, 343) agencé pour arrêter le mouvement de l'élément de maintien (26, 326) par rapport au mécanisme support (29, 364) dans une pluralité de positions.

2. Véhicule du type à selle (1) selon la revendication 1, **caractérisé en ce que** le mécanisme de butée (43, 243, 343) est agencé de sorte que l'arrêt du mouvement de l'élément de maintien (26, 326) par le mécanisme de butée (43, 243, 343) est libéré entre la pluralité de positions par l'élément de verrouillage (16) appuyé contre l'élément de maintien (26, 326) en conséquence d'un mouvement relatif entre le châssis de corps de véhicule (3) et le siège (4).

3. Véhicule du type à selle (1) selon la revendication 1 ou 2, **caractérisé en ce que** le mécanisme de réglage de position de verrouillage (42, 342) est capable de régler la hauteur de la position de verrouillage dans une seule direction parmi la direction supérieure et la direction inférieure.

4. Véhicule du type à selle (1) selon l'une quelconque des revendications 1 à 3, **caractérisé en ce que** le mécanisme support (29, 364) comporte un arbre support (29) supportant l'élément de maintien (26) de façon à pouvoir tourner vers le haut et vers le bas, et
le mécanisme de butée (43, 243, 343) comporte un mécanisme d'encliquetage (43, 243) agencé pour arrêter l'élément de maintien (26) dans une pluralité de positions de rotation, le mécanisme d'encliquetage (43, 243) comporte de préférence une partie de prise (44) incluant une pluralité de dents, une partie de cliquet (45) agencée pour être en prise avec la partie de prise (44) et un ressort (46, 246) appuyant l'une contre l'autre la partie de prise (44, 344) et la partie de cliquet (45), le ressort (46, 246) comporte de préférence soit un ressort de tension (46), soit un ressort de compression (246).

5. Véhicule du type à selle (1) selon la revendication 4, **caractérisé en ce que** la partie de cliquet (45) est reliée au dispositif de libération de verrou (15) et entraînée par le dispositif de libération de verrou (15) de façon à relâcher la prise entre la partie de prise (44, 344) et la partie de cliquet (45).

6. Véhicule du type à selle (1) selon la revendication 5, **caractérisé en ce que** la distance (D1) d'une position de prise entre la partie de prise (44) et la partie de cliquet (45) à l'axe de rotation (As) de la partie de cliquet (45) est plus courte que la distance (D2) de la position de prise à l'axe de rotation (Ah) de la partie de prise (44).

7. Véhicule du type à selle (1) selon l'une quelconque des revendications 4 à 6, **caractérisé en ce que** l'axe de rotation (Ah) de la partie de prise (44) et l'axe de rotation (As) de la partie de cliquet (45) sont disposés sur des côtés opposés l'un par rapport à l'autre par rapport à la position de verrouillage de l'élément de verrouillage (16) par le mécanisme de verrouillage (17).

8. Véhicule du type à selle (1) selon l'une quelconque des revendications 4 à 6, **caractérisé en ce que** l'axe de rotation (Ah) de la partie de prise (44) et l'axe de rotation (As) de la partie de cliquet (45) sont disposés du même côté par rapport à la position de verrouillage de l'élément de verrouillage (16) par le mécanisme de verrouillage (17).

9. Véhicule du type à selle (1) selon l'une quelconque des revendications 1 à 3, **caractérisé en ce que** le mécanisme support (29, 364) comporte un mécanisme à coulissement (364) supportant l'élément de maintien (326) de façon à pouvoir coulisser dans la direction haut-bas, et
le mécanisme de butée (343) est agencé pour arrêter le mouvement de l'élément de maintien (326) dans la direction haut-bas par rapport au mécanisme support (364) à une pluralité de hauteurs.

10. Véhicule du type à selle (1) selon la revendication 9, **caractérisé en ce que** le mécanisme de butée (343) est agencé de sorte que la fixation de l'élément de maintien (326) dans la direction haut-bas par rapport au mécanisme support (364) est libérée par un élément de libération (363) monté de manière amovible sur le mécanisme de butée (343).

11. Véhicule du type à selle (1) selon l'une quelconque des revendications 1 à 10, **caractérisé en ce que** le mécanisme de verrouillage (17, 317) est prévu sur le châssis de corps de véhicule (3) et le mécanisme de réglage de position de verrouillage (42, 342) est prévu sur le mécanisme de verrouillage (17, 317).

12. Véhicule du type à selle (1) selon l'une quelconque des revendications 1 à 11, **caractérisé par** une boîte de rangement (8) comportant une partie d'ouverture (8a) destinée à être ouverte et fermée par le siège (4), et disposée en dessous du siège (4), dans lequel le mécanisme de réglage de position de verrouillage (42, 342) est capable de régler la hauteur de la position de verrouillage dans un état dans lequel la partie d'ouverture (8a) de la boîte de rangement (8) est fermée par le siège (4).

13. Véhicule du type à selle (1) selon l'une quelconque des revendications 1 à 12, **caractérisé en ce que** le dispositif de raccordement de siège (13) comporte une articulation (19) reliant de façon rotative le siège (4) au châssis de corps de véhicule (3).

14. Véhicule du type à selle (1) selon l'une quelconque des revendications 1 à 13, **caractérisé par** un réservoir de carburant (9) disposé en dessous du siège (4).
